(19) Europäisches Patentamt / European Patent Office / Office européen des brevets

(11) **EP 3 332 476 B1**

(12) **EUROPÄISCHE PATENTSCHRIFT**

(45) Veröffentlichungstag und Bekanntmachung des Hinweises auf die Patenterteilung:
**13.05.2020 Patentblatt 2020/20**

(21) Anmeldenummer: **16747459.2**

(22) Anmeldetag: **21.07.2016**

(51) Int Cl.:
*H02P 6/185* (2016.01)  *H02P 21/12* (2016.01)

(86) Internationale Anmeldenummer:
**PCT/EP2016/067365**

(87) Internationale Veröffentlichungsnummer:
**WO 2017/045810 (23.03.2017 Gazette 2017/12)**

(54) **VERFAHREN ZUR IDENTIFIKATION DER MAGNETISCHEN ANISOTROPIE EINER ELEKTRISCHEN DREHFELDMASCHINE**

METHOD FOR IDENTIFYING THE MAGNETIC ANISOTROPY OF AN ELECTRIC ROTARY FIELD MACHINE

PROCÉDÉ D'IDENTIFICATION DE L'ANISOTROPIE MAGNÉTIQUE D'UNE MACHINE ÉLECTRIQUE À CHAMP TOURNANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.09.2015 DE 102015217986**

(43) Veröffentlichungstag der Anmeldung:
**13.06.2018 Patentblatt 2018/24**

(73) Patentinhaber: **KOSTAL Drives Technology GmbH 58513 Lüdenscheid (DE)**

(72) Erfinder: **LANDSMANN, Peter 80809 München (DE)**

(74) Vertreter: **Samson & Partner Patentanwälte mbB Widenmayerstraße 6 80538 München (DE)**

(56) Entgegenhaltungen:
**EP-A1- 2 023 479**

**Beschreibung**

Die Erfindung betrifft ein Verfahren zur Identifikation der magnetischen Anisotropie einer elektrischen Drehfeldmaschine, umfassend einen Rotor und einen Stator, wobei die Drehfeldmaschine über getaktete Klemmspannungen nach dem Verfahren der Pulsweitenmodulation angesteuert wird. Die Erfindung betrifft weiter eine Vorrichtung zur Steuerung und/oder Regelung einer Drehfeldmaschine, wobei ein Controller zur Durchführung des beschriebenen Verfahrens eingerichtet und ausgebildet ist. Weiter betrifft die Erfindung eine Drehfeldmaschine mit einem Stator, mit einem Rotor und mit einer Vorrichtung zu seiner Steuerung und/oder Regelung. Generell bezieht sich die Erfindung auf das technische Gebiet einer geberlosen Steuerung und/oder Regelung einer Drehfeldmaschine, wobei die Rotorlage oder der Rotorwinkel aus der Anisotropie der Induktivität abgeleitet wird. Die Erfindung stellt durch die Bereitstellung der von der Rotorlage abhängigen Anisotropie der Induktivität einen entscheidenden Schritt zur Verfügung, um die Rotorlage bzw. den Rotorwinkel der Drehfeldmaschine zu berechnen. Die Auswertung der identifizierten Anisotropie im Hinblick auf die Rotorlage ist nicht Gegenstand der Erfindung.

Durch die zunehmende Elektrifizierung des Alltags finden Elektromotoren eine immer größer werdende Verbreitung. So werden heute fast alle Bewegungsvorgänge in Haushaltsanwendungen, z.B. Waschmaschinen, Bohrmaschinen, CD-Spieler und Festplatten, oder in Industrieanwendungen, z.B. Pumpen, Lüfter, Förderanlagen, Kräne und Roboter, mittels Elektromotoren betrieben. Auch der Transportsektor findet mit der Elektromobilität seine zunehmende Elektrifizierung. Als Elektromotoren werden zunehmend Drehfeldmaschinen, z.B. Asynchronmaschinen oder Synchronmaschinen, eingesetzt, die elektronisch mittels Pulswechselrichtern nach dem Verfahren der Pulsweitenmodulation (PWM) angesteuert werden. Die heute etablierte, hocheffiziente Ansteuerung der Elektromotoren setzt voraus, dass der Rotorwinkel zu jedem Zeitpunkt bekannt ist, d.h. in der Regel gemessen wird. Ohne diese Kenntnis können nur deutlich ineffizientere Ansteuerverfahren eingesetzt werden. Die Messung erfolgt im Betrieb mittels eines Sensors, der an der Rotorwelle angebracht ist, der üblicherweise als Winkelgeber oder kurz als Geber bezeichnet wird.

Obwohl Geber die gewünschte effiziente Ansteuerung der Elektromotoren ermöglichen, bringen sie eine Reihe von Nachteilen mit sich, von denen einige im Folgenden aufgelistet sind:

a) Systemkosten: Durch den Einsatz eines Gebers einschließlich Kabel, Auswerte-Schaltung und Inbetriebnahme entstehen unerwünschte Mehrkosten.

b) Verringerte Robustheit: Der Geber ist in der Regel das empfindlichste Bauteil im System und verhindert den Einsatz unter rauen Bedingungen wie Staub, Schmutz, Temperatur, Druck oder Erschütterung und Vibration.

c) Erhöhte Ausfallwahrscheinlichkeit: Durch Geber, Kabel und AuswerteSchaltung erhöht sich die Anzahl der für den Betrieb erforderlichen Systemkomponenten und damit die Ausfallwahrscheinlichkeit. Insbesondere sind Kabel und Steckverbinder oft im Fokus dieser Betrachtung.

d) Erhöhter Bauraumbedarf: Ein Geber benötigt Platz am Ende des Motors und setzt ein freies Wellenende voraus. Für bauraumkritische Anwendungen, wie z.B. in der Automobiltechnik, oder für Anwendungen, die beide Wellenenden benötigen, wie z.B. für Radnabenmotoren, kann dies zum Ausschlusskriterium für den Einsatz effizienter Ansteuerverfahren werden.

Diese und andere Nachteile erklären das starke industrielle Interesse, die Information über die Rotorlage bzw. über den Rotorwinkel ohne Verwendung eines Gebers zu gewinnen und für die effiziente Ansteuerung oder Regelung einzusetzen. Verfahren, die dies ermöglichen, werden als geberlose oder als sensorlose Verfahren bezeichnet und teilen sich in zwei Klassen auf, nämlich in Grundwellenverfahren und in Anisotropie-basierte Verfahren..

Grundwellenverfahren berechnen den Rotorwinkel auf Basis der unter Bewegung induzierten Spannung. Sie sind oft einfach strukturiert, liefern eine gute Signalqualität und finden in geeigneten Anwendungen bereits eine gewisse industrielle Verbreitung. Da diese Spannung allerdings bei kleinen Drehzahlen, wie z.B. beim Waschgang in Waschmaschinen, und insbesondere Stillstand, wie z.B. beim Haltevorgang eines Fahrstuhls, verschwindet, erlauben diese Verfahren nur Anwendungen, deren Betrieb sich auf hohe Drehzahlen beschränkt.

Anisotropie-basierte Verfahren werten die Lage- bzw. Winkelabhängigkeit der Induktivität der Maschine mittels hochfrequenter Anregung aus, wozu keine Drehzahl notwendig ist. Sie decken damit den unteren Drehzahlbereich ab, sind aber im Vergleich zu Grundwellenverfahren komplexer und finden eine noch sehr geringe industrielle Verbreitung.

Eine geberlose Abdeckung des gesamten Drehzahlbereichs ist in der Industrie noch nicht gegeben. Während andere Probleme inzwischen gelöst sind, zählen insbesondere die technologische Komplexität und der Rechenzeitbedarf Anisotropie-basierter Verfahren heute noch zu den Gründen für ihre geringe Verbreitung. Um dem industriellen Bedarf zu entsprechen, sollten diese Verfahren ohne zeitintensive Einarbeitung verstanden und insbesondere auch auf Micro-Controllern mit hoher anderweitiger Auslastung noch umgesetzt werden können.

Anisotropie-basierte Verfahren lassen sich in modulations-basierte und zeitdiskrete Verfahren unterteilen. Neben anderer Nachteile (Dynamik- und Drehzahleinschränkung, Fehler durch implizierte Annahmen) benötigen modulationsbasierte Verfahren, wie die rotierende Injektion (siehe z.B. P. L. Jansen und R. D. Lorenz, "Transducerless Position and Velocity Estimation in Induction and Salient AC Machines," IEEE Trans. on Industrial Applications, Bd. 31, pp. 240-247, 1995) oder die alternierende Injektion (siehe z.B. M. J. Corley und R. D. Lorenz, "Rotor Position and Velocity Estimation for a Salient-Pole Permanent Magnet Synchronous Machine at Standstill and High Speeds," IEEE Trans. on Industrial Applica-tions, Bd. 34, pp. 784-789, 1998) trigonometrische Rechenoperationen und meh- rere Filter (Bandpass, Tiefpass) und sind damit vergleichsweise rechenaufwändig. In zeitdiskreten Verfahren konnten inzwischen verschiedene Probleme überwunden werden (siehe z.B. D. Paulus, P. Landsmann und R. Kennel, "Sensorless Field- oriented Control for Permanent Magnet Synchronous Machines with an Arbitrary Injection Scheme and Direct Angle Calculation," IEEE Conf. SLED, pp. 41-46, 2011; EP O 579 694 A1; M. Schroedl, "Operation of the permanent magnet synchronous machine without a mechanical sensor," Conf. Power Electronics and Variable-Speed Drives, pp. 51-56, 1990; F. De Belie, T. Vyncke und J. Melkebeek, "Parameterless Rotor Position Estimation in a Direct-Torque Controlled Salient-Pole PMSM without Using Additional Test Signal," IEEE Conf. ICEM, pp. 1-6, 2010; S. Kim, Y.-C. Kwon, S.-K. Sul, J. Park und S.-M. Kim, "Position Sensorless Operation of IPMSM with Near PWM Switching Frequency Signal Injection," IEEE Conf. ICPE - ECCE Asia, pp. 1660-1665, 2011).

EP 2 023 479 A1 betrifft ein Verfahren zur Ermittlung der elektrischen AntriebsGeschwindigkeit und/oder -Lage bei einem Permanentmagnet-Läufer einer elektrischen bürstenlosen Linear- oder Rotations-Maschine aus einer Messung eines mehrphasigen Statorstroms, insbesondere für einen elektrischen Antriebsregelkreis, bei dem sechs Spannungsvektoren eingeprägt werden. Diese sind folglich nicht orthogonal oder antiparallel zueinander, und ermöglichen somit keine effiziente Berechnung.

Zusammenfassend kann gesagt werden, dass zeitdiskrete Verfahren zur Identifikation der Anisotropie aus zwei Stufen aufgebaut sind. Eine erste Stufe erfordert einige Subtraktionen, die als geringer Rechenaufwand eingestuft werden können. In einer rechenaufwändigeren, zweiten Stufe unterscheiden sich bekannte Verfahren. Das sparsamste Verfahren benötigt unter anderem 8 Multiplikationen; das aufwändigste Verfahren darüber hinaus bis zu 2 Divisionen. Weil diese Operationen viele tausend Mal pro Sekunde abgearbeitet werden müssen, haben bekannte Anisotropie-Verfahren somit nachteiligerweise einen nicht unerheblichen Beitrag zur Auslastung des Micro-Controllers.

Der Erfindung liegt die Aufgabe zugrunde, ein alternatives Verfahren zur Identifikation der anisotropen Induktivität einer elektrischen Drehfeldmaschine anzugeben, welches mit möglichst wenig Rechenaufwand durchgeführt werden kann. Weiter soll eine entsprechende Vorrichtung zur Steuerung und/oder Regelung einer Drehfeldmaschine sowie eine entsprechende Drehfeldmaschine angegeben werden.

Diese Aufgabe wird erfindungsgemäß gelöst durch den Gegenstand der unabhängigen Patentansprüche.

Bei einem Verfahren zur Identifikation der magnetischen Anisotropie einerelektrischen Drehfeldmaschine, umfassend einen Rotor und einen Stator, wobei die Drehfeldmaschine über getaktete Klemm spannungen nach dem Verfahren der Pulsweitenmodulation angesteuert wird, werden während eines Injektionsintervalls mehrere Spannungsvektoren, wenigstens vier Spannungsvektoren, gestellt, die in einer Raumzeigerdarstellung nach jeweiligem Abzug des gemeinsamen Mittelwerts alle denselben Betrag aufweisen und jeweils paarweise zueinander orthogonal oder antiparallel stehen Als Antwort auf die vier Spannungsvektoren wird jeweils eine korrespondierende Änderung des Stromvektors ermittelt, und unter Be rücksichtigung der Spannungsvektoren wird aus den jeweiligen Änderungen derStromvektoren auf die Einträge der magnetischen Anisotropie geschlossen. Mit anderen Worten werden innerhalb eines Injektionsintervalls vier oder mehr Spannungsvektoren gestellt, von denen wenigstens vier die vorgenannten Eigenschaften aufweisen. Demnach ist vorgesehen, dass jeder beliebige der wenigstens vier Spannungsvektoren in Raumzeigerdarstellung nach jeweiligem Abzug des gemeinsamen Mittelwerts zu jedem beliebigen anderen der vier Spannungsvektoren entweder orthogonal oder antiparallel steht. Mit anderen Worten gibt es in den wenigstens vier Spannungsvektoren, in Raumzeigerdarstelllung und nach jeweiligem Abzug des gemeinsamen Mittelwerts der vier Spannungsvektoren, kein Paar an Spannungsvektoren, die nicht orthogonal oder antiparallel zueinander stehen. Die zwei Spannungsvektoren jedes beliebigen Paares der wenigstens vier Spannungsvektoren stehen, in Raumzeigerdarstellung und nach jeweiligem Abzug des gemeinsamen Mittelwerts der vier Spannungsvekto- ren, zueinander entweder orthogonal oder antiparallel.

Die Erfindung geht dabei von einem zeitdiskreten Anisotropie-basierten Verfahren aus, wobei über die PWM-Taktung hochfrequente Spannungen injiziert werden, und wobei aus der entsprechenden Stromantwort die anisotrope Induktivität identifiziert wird, so dass deren Abhängigkeit von der Rotorlage bzw. vom Rotorwinkel zugänglich wird und entsprechend ausgewertet werden kann. Vorliegend werden während eines Injektionsintervalls wenigstens vier Spannungsvektoren gestellt, die in einer Raumzeigerdarstellung nach jeweiligem Abzug des gemeinsamen Mittelwerts alle denselben Betrag aufweisen und jeweils paarweise zueinander orthogonal oder antiparallel stehen. Unter dieser Voraussetzung können, wie im Folgenden gezeigt werden wird, mit einem im Vergleich zu bekannten zeitdiskreten Verfahren weiter verringerten Rechenaufwand, insbesondere nur mit Additionen und Subtraktionen, die Einträge der magnetischen Anisotropie identifiziert werden. Dazu werden die zu den vier Spannungsvektoren jeweils korrespondierenden Änderungen des Stromvektors ermittelt. Unter Berücksichtigung der Spannungsvektoren werden aus diesen jeweils korrespondierenden Änderungen des Stromvektors Einträge der magnetischen Anisotropie der Drehfeldmaschine ggf. bis auf einen Skalierungsfaktor ermittelt.

Weil die magnetische Anisotropie der Maschine von der Rotorlage abhängt, kann aus den ermittelten Einträgen insbesondere weiter auf die Rotorlage geschlossen werden.

Die Erfindung geht zunächst davon aus, dass die rechenaufwändigsten Operationen bei der Aufschlüsselung der Induktivität erforderlich sind, weil diese den Bezug zwischen Strom- und Spannungsvektoren herstellen muss. Hierfür wird entweder eine Transformation nach Spannungskoordinaten oder eine inverse Matrix-Multiplikation verwendet. Die Erfindung setzt genau an diesem Punkt an. Die Transformation in Spannungskoordinaten wird rechentechnisch stark vereinfacht, wenn die zugrundeliegenden Spannungen in Raumzeigerdarstellung zueinander orthogonal oder antiparallel stehen. In einer besonders bevorzugten Variante verlaufen die zugrundeliegenden Spannungen parallel oder antiparallel zu den Achsen des verwendeten Koordinatensystems der Raumzeigerdarstellung, insbesondere zu den Achsen des Stator-Koordinatensystems, die üblicherweise als $\alpha$-Achse und $\beta$-Achse bezeichnet werden. Dann stellt die Transformation lediglich ein vorzeichenbehaftetes Vertauschen der Komponenten des Stromvektors dar. Wie jedoch noch weiter gezeigt wird, geht die Reduktion des Rechenaufwands für das angegebene Verfahren noch weit über diese Vereinfachungen hinaus. Wird der Ansatz konsequent durchgerechnet, dann beläuft sich in einer besonders bevorzugten Variante die Ergebnisgleichung zur Identifikation der Anisotropie, vorliegend der Einträge eines Anisotropie-Vektors, lediglich auf 2 Additionen und 4 Subtraktionen. Die Ergebnisgleichung lautet dann:

$$y_\alpha \sim \Delta i_{\alpha 0} - \Delta i_{\beta 1} - \Delta i_{\alpha 2} + \Delta i_{\beta 3}$$

$$y_\beta \sim \Delta i_{\beta 0} + \Delta i_{\alpha 1} - \Delta i_{\beta 2} - \Delta i_{\alpha 3}$$

Wobei $y_x$ die Einträge des Anisotropie-Vektors $y_a^s$ und $\Delta i_{xx}$ die Einträge der als Antwort auf einen Spannungsvektor erfassten korrespondierenden Stromänderung bezeichnen. Dies ist ein Bruchteil des Rechenaufwands aller Verfahren des Standes der Technik. Ein derartiges Verfahren mit erstmals nur einer Berechnungsstufe kann zudem leicht implementiert werden, ohne sich grundsätzlich in die Theorie Anisotropie-basierter Verfahren einarbeiten zu müssen.

Das angegebene Verfahren ist insbesondere auch dadurch charakterisiert, dass beispielsweise durch einen PWM-Pulswechselrichter in kurzen zeitlichen Abständen wiederholt folgendes Pulsmuster gestellt wird. Vier insbesondere aufeinanderfolgende Spannungsvektoren liegen in transformierter Raumzeigerdarstellung abzüglich ihres gemeinsamen Mittelwerts zueinander exakt orthogonal und antiparallel und besitzen den gleichen Betrag. Die Reihenfolge der vier Spannungsvektoren ist durch die Erfindung nicht festgelegt. Der zeitliche Abstand zwischen den vier Spannungsvektoren sollte möglichst kurz gewählt sein, so dass wie ebenfalls im Folgenden gezeigt werden wird, die Annahme einer konstanten Rotorlage während des Injektionsintervalls noch erfüllt ist. Die vier Spannungsvektoren können jedoch über einen Steuerungs- oder Regelungstakt der Drehfeldmaschine verteilt sein. Ebenfalls ist es notwendig, das Verfahren bzw. die Stellen der vier Spannungsvektoren kontinuierlich während des Betriebs der Drehfeldmaschine durchzuführen. Es unterfällt ebenso der Erfindung, das Verfahren gelegentlich und insbesondere mit dem Takt bzw. der Frequenz eines Drehzahlreglers durchzuführen.

Bei der Raumzeigerdarstellung werden für eine Drehfeldmaschine die elektromagnetischen Größen, und insbesondere die Strom- und Spannungsgrößen, durch eine entsprechende Transformation in Raumzeiger eines zweidimensionalen Koordinatensystems überführt. Diese Überführung der üblicherweise dreidimensionalen Größen (im Falle eines Dreiphasensystems) in zweidimensionale Größen ist möglich, da die Komponenten im Dreiphasensystem nicht unabhängig voneinander sind. Beispielsweise ist im Falle einer Drehfeldmaschine in Sternschaltung die zusätzliche Bedingung gegeben, dass sich die Summe der Phasenströme zu Null addiert. Durch Kenntnis zweier Komponenten ist somit im Dreiphasensystem die dritte Komponente bekannt.

In Raumzeigerdarstellung werden die Beschreibung der physikalischen Zusammenhänge und damit die für eine Steuerung und/oder Regelung notwendigen Berechnungen vereinfacht. In modernen Regelungsverfahren für eine Drehfeldmaschine wird daher üblicherweise auf die Raumzeigerdarstellung zurückgegriffen und durch entsprechende Transformationen zwischen den zwei- und dreidimensionalen Systemen hin- und her gerechnet. Beispielsweise wird der über das Regelungsverfahren ermittelte Stellwert des Spannungsraumzeigers zur Ansteuerung eines Pulswechselrichters in die auszugebenden drei Klemmspannungen bzw. drei Komponenten eines Dreiphasensystems umgerechnet. Für die Raumzeigerdarstellung werden üblicherweise ein statorfestes Koordinatensystem, dessen Achsen als $\alpha$-Achse und $\beta$-Achse bezeichnet werden, oder ein rotorfestes Koordinatensystem, dessen Achsen als d-Achse und q-Achse bezeichnet werden, verwendet. Die Transformation einer dreidimensionalen Größe in das statorfeste a, $\beta$-Koordinatensystem wird als Clarke-Transformation bezeichnet. Die Transformation einer dreidimensionalen Größe in das rotorfeste d, q-Koordinatensystem wird als Park-Transformation bezeichnet. Zwischen den beiden Koordinatensystemen kann mit einer Drehmatrix gewechselt werden. Die Raumzeigerdarstellung ist an sich bekannt und wird daher im Übrigen vorliegend nicht weiter beschrieben.

Zur Regelung einer Drehfeldmaschine wird häufig eine sogenannte feldorientierte Regelung eingesetzt, wobei der Sollwert für einen Spannungsvektor als Stellgröße in Abhängigkeit des gemessenen Stromvektors als Führungsgröße ermittelt wird. Der in die drei Phasenspannung bzw. Klemmspannungen transformierte Sollwert des Spannungsvektors wird dann zur Ansteuerung eines Pulswechselrichters herangezogen, der die entsprechenden Spannungen stellt.

Während der Spannungsvektor und die zugehörigen Phasen- bzw. Klemmspannungen als Rechengrößen wertkontinuierlich sind und über diskrete Zeitdauern anliegend interpretiert werden, ist die tatsächliche Umsetzung einer Spannung an der Drehfeldmaschine bei einem Verfahren der Pulsweitenmodulation (PWM) umgekehrt. Der Pulswechselrichter legt diskrete Spannungswerte (entweder Masse oder eine Zwischenkreisspannung) während eines PWM-Taktes (halbe PWM-Periode) über kontinuierliche Zeitdauern an. Der Effekt auf die Drehfeldmaschine ist der gleiche, denn nur die Spannungszeitfläche ist für die Maschine relevant und diese ist in beiden Fällen die gleiche. Mit dem Term einer Spannung wird daher hier und im Folgenden immer auf den zeitlichen Mittelwert der Spannung Bezug genommen, also auf den sich über einen PWM-Takt bzw. über eine halbe PWM-Periode ergebenden Mittelwert. Dies gilt für die Spannungswerte der Klemmspannungen ebenso wie für die Einträge der Spannungsvektoren in Raumzeigerdarstellung.

In einer bevorzugten Ausgestaltung sind die wenigstens vier Spannungsvektoren jeweils einzeln durch eine Vektoraddition des gemeinsamen Mittelwerts und einer von vier Injektionsspannungen gegeben, wobei die vier Injektionsspannungen jeweils paarweise zueinander orthogonal oder antiparallel stehen und den gleichen Betrag besitzen. Hierdurch wird Bezug genommen auf die im Stand der Technik übliche Beschreibung eines diskreten Anisotropiebasierten Verfahrens, wobei "Injektionsspannungen" zum Zwecke der Identifikation der Anisotropie der für die Drehfeldmaschine bzw. für den Pulswechselrichter jeweils vorgegebenen Sollwert des Spannungsvektors aufaddiert werden. Dies ist eine rechnerische Addition, wobei durch den Pulswechselrichter bzw. als Klemmspannungen für die Drehfeldmaschine grundsätzlich der aufaddierte Stellwert ausgegeben und messtechnisch sichtbar wird. Gleichwohl ist nicht ausgeschlossen, dass in einer Variante die Injektionsspannungen über eine reale Addition dem vorgegebenen Stellwert des Spannungsvektors aufaddiert werden. Die wenigstens vier Spannungsvektoren können auch in einer Sequenz von mehr als vier Spannungsvektoren innerhalb des Injektionsintervalls enthalten sein. Dabei erfüllen diese "wenigstens" vier Spannungsvektoren die vorgenannten Bedingungen, wobei die Merkmale der übrigen Spannungsvektoren der Sequenz durch die vorliegende Erfindung an sich nicht vorgegeben sind, sofern in Weiterbildungen nicht spezifische Eigenschaften gesondert gefordert sind oder notwendig werden.

Wie bereits ausgeführt, wird eine Drehfeldmaschine üblicherweise über einen für einen konkreten Zeitraum (den Regelungs- oder Steuerungstakt) konstant vorgegebenen Sollwert des Spannungsvektors der Klemmspannungen gesteuert bzw. geregelt. Der zeitliche Mittelwert aller während eines Steuerungs- oder Regelungstaktes gestellten Spannungsvektoren entspricht dabei dem für diesen Takt vorgegebenen Sollwert. In einer zweckmäßigen Variante des Verfahrens wird die Drehfeldmaschine daher unter Verwendung des Spannungsvektors der Klemmspannungen als Stellgröße geregelt und/oder gesteuert, wobei während des Injektionsintervalls ein konstanter Sollwert für den Spannungsvektor der Klemmspannungen vorgegeben wird, und wobei der gemeinsame Mittelwert der wenigstens vier Spannungsvektoren dem konstant vorgegebenen Sollwert entspricht. Auf diese Weise lässt sich die Zykluszeit bzw. die zeitliche Dauer des Injektionsintervalls minimieren, da die für das angegebene Verfahren benötigten vier Spannungsvektoren im angegebenen Fall alle unmittelbar aufeinander folgen können. Der Steuerungs- oder Regelungstakt umfasst dann im Minimalfall wenigstens zwei PWM-Perioden, da während einer PWM-Periode zwei Stelltakte mit einer jeweils über eine diskrete Zeitdauer gestellten Spannung durchgeführt werden. Zum Stellen der vier Spannungsvektoren sind insofern wenigstens vier PWM-Takte oder zwei PWM-Perioden erforderlich. Die Berechnung eines neuen Sollwerts für den Spannungsvektor in einer implementierten Steuerung und/oder Regelung wird insofern frühestens nach zwei PWM-Perioden oder vier PWM-Takten erneut durchgeführt.

In einer weiteren vorteilhaften Variante des Verfahrens stehen in Raumzeigerdarstellung die vier Spannungsvektoren nach Abzug ihres gemeinsamen Mittelwerts jeweils parallel oder antiparallel zu den orthogonalen Achsen eines für die Raumzeigerdarstellung gewählten Koordinatensystems. Durch diese Variante reduziert sich der rechnerische Aufwand zur Identifikation der Anisotropie beträchtlich weiter. Liegen mit anderen Worten die dem gewünschten Stellwert des Spannungsvektors aufaddierten Injektionsspannungen parallel oder antiparallel zu den Achsen des Koordinatensystems, so reduziert sich insbesondere eine zur Berechnung in Anisotropie-basierten Verfahren notwendige Transformation zwischen dem für die Raumzeigerdarstellung gewählten Koordinatensystem und einen spannungsbezogenen Koordinatensystem auf einen Austausch der Komponenten. Die Terme einer zwischen beiden Koordinatensystemen vermittelnden Drehmatrix reduzieren sich auf Werte von 0, +1 oder -1. Bevorzugt wird als Koordinatensystem der Raumzeigerdarstellung ein statorfestes Koordinatensystem gewählt.

Zweckmäßigerweise entspricht das Injektionsintervall wenigstens zwei Perioden der Pulsweitenmodulation. In diesem Fall wird, wie bereits erwähnt, die mögliche Taktung der Pulsweitenmodulation maximal ausgenutzt. Die Injektionsspannungen werden mit der doppelten PWM-Frequenz injiziert. Weiter zweckmäßig entspricht die zeitliche Dauer des Injektionsintervalls maximal dem Quotienten aus Phaseninduktivität L und Phasenwiderstand R der Drehfeldmaschine. Dieser Quotient L/R wird auch als elektrische Zeitkonstante bezeichnet und beschreibt den Zeitraum, in dem sich das Steuerungs- und/oder Regelungssystem der Drehfeldmaschine selbst einschwingt. Eine Ausdehnung des Injektionsintervalls über diesen Wert hinaus ist nicht sinnvoll, da ein entsprechend langes Intervall zur Vorgabe eines konstanten Sollwerts eine Regelung für die Drehfeldmaschine sinnfrei machen würde. In einer bevorzugten Variante hierzu beträgt die obere Grenze der zeitlichen Dauer des Injektionsintervalls maximal 16 Perioden der Pulsweitenmodulation. Hierbei wird Bezug auf die bekannten Steuer- und Regelungsverfahren genommen, deren Regelungs- bzw. Steuerungstakt gegenüber dem PWM-Takt erniedrigt ist. Mit anderen Worten berechnet in der bevorzugt gegebenen Maximalvariante beispielsweise ein Stromregler der Regelung einer Drehfeldmaschine einen neuen Soll- bzw. Stellwert des Spannungsvektors nur alle 16 PWM-Perioden.

Bevorzugt wird weiter die Drehfeldmaschine mit einem Takt gesteuert und/oder geregelt, der wenigstens 2 Perioden der Pulsweitenmodulation umfasst. Entsprechend dem Vorgesagten wird desweiteren vorteilhaft eine obere Grenze für den Steuerungs- und/oder Regelungtakt entsprechend dem Quotienten aus Phaseninduktivität und Phasenwiderstand der Drehfeldmaschine, dabei insbesondere bevorzugt von 16 PWM-Perioden, gewählt.

In einer vorteilhaften anderen Ausführungsvariante werden die vier Spannungsvektoren bzw. Injektionsspannungen in unmittelbar aufeinanderfolgenden PWM-Takten gestellt. Der Zeitabstand zwischen zwei aufeinanderfolgenden Injektionsspannungen wird hierdurch minimalisiert, so dass die Annahme einer innerhalb des Injektionsintervalls konstanten Rotorlage bestmöglich erfüllt ist.

Weiter bevorzugt wird der Betrag der Injektionsspannungen bzw. der Betrag der Spannungsvektoren nach Abzug des gemeinsamen Mittelwerts als wenigstens 1 % des Betrags einer maximalen Stellspannung, insbesondere zwischen 5 V und 100 V, gewählt. Der maximale Wert der Stellspannung ist hierbei bekanntermaßen im Falle eines Pulswechselrichters mit Gleichspannungszwischenkreis als 2/3 der Zwischenkreisspannung gegeben. Ein typischer Wert für eine solche Maximalspannung sind beispielsweise 370 V. Über den Betrag bzw. die Amplitude der Injektionsspannungen kann Einfluss auf die Schätzqualität genommen werden. Die tatsächliche Schätzqualität hängt jedoch stark von der tatsächlich eingesetzten Drehfeldmaschine und der eingesetzten Strommessvorrichtung ab. Es wird unmittelbar ersichtlich, dass die Höhe der real vorhandenen magnetischen Anisotropie unmittelbar Einfluss auf die Schätzergebnisse nehmen wird.

Bevorzugt werden die korrespondierenden Änderungen des Stromvektors jeweils als Differenzvektoren in Raumzeigerdarstellung ermittelt. In modernen Regelungsverfahren liegen die Stromvektoren in Raumzeigerdarstellung bereits vor, da ohnehin in Raumzeigerdarstellung gerechnet wird. Die jeweiligen Stromvektoren in Raumzeigerdarstellung ergeben sich durch Transformation aus den erfassten bzw. gemessenen Phasenströmen. Dabei ist es, wie eingangs erläutert, nicht notwendig, alle Phasenströme zu messen, da die Phasenströme nicht vollständig voneinander unabhängig sind. Bevorzugt wird weiter aus den Differenzvektoren die anisotrope Stromantwort in Raumzeigerdarstellung ermittelt, wobei aus der ermittelten anisotropen Stromantwort in Raumzeigerdarstellung auf die Einträge der magnetischen Anisotropie geschlossen wird. Diese Vorgehensweise erfordert vergleichsweise wenige Rechenoperationen. Insbesondere wird hierbei unter Transformation auf Spannungskoordinaten eine isotrope Stromantwort herausgerechnet, was sich insbesondere bei zu den Koordinatenachsen des Raumzeigersystems parallelen oder antiparallelen Injektionsspannungen wesentlich vereinfacht.

In einer weiter bevorzugten Ausführungsvariante wird aus den Einträgen der Differenzvektoren in Raumzeigerdarstellung ausschließlich durch Additionen und Subtraktionen ggf. bis auf einen Skalierungsfaktor auf die Einträge der magnetischen Anisotropie geschlossen. Hierdurch stellt das Verfahren gegenüber zeitdiskreten Anisotropie-basierten Verfahren des Standes der Technik einen wesentlichen Vorteil dar. Ein Skalierungsfaktor ist bei ideal sinusförmigem Maschinenverhalten nicht erforderlich. Bei nicht sinusförmigem Maschinenverhalten und konstanter Injektionsamplitude ist ein konstanter Skalierungsfaktor zu verwenden. Lediglich bei Verwendung variabler Injektionsamplituden ist ggf. ein variabler Faktor zur Skalierung heranzuziehen. Bevorzugt bleibt daher der Betrag der Injektionsspannungen bzw. der Betrag der vier Spannungsvektoren nach Abzug des gemeinsamen Mittelwerts konstant. Jedoch ist nicht ausgeschlossen, den Betrag der Injektionsspannungen über verschiedene Injektionsintervalle zu ändern.

In einer vorteilhaften weiteren Ausführung werden die Einträge der magnetischen Anisotropie analog ermittelt. Es hat sich nämlich, wie vorstehend erläutert, gezeigt, dass das angegebene Verfahren in der Lage ist, aus der gemessenen Stromantwort, insbesondere aus den messtechnisch ermittelten Differenzvektoren in Raumzeigerdarstellung, ausschließlich mittels Additionen und Subtraktionen sowie gegebenenfalls einer Multiplikation zur Skalierung, unmittelbar auf die Einträge der magnetischen Anisotropie zu schließen. Auch die Transformation des Messsignals in die Raumzeigerdarstellung lässt sich in einfacher Art und Weise, insbesondere im Falle des statorfesten Koordinatensystems, mittels Analogtechnik durchführen. Somit können die Einträge der magnetischen Anisotropie unmittelbar aus einem messtechnisch gewonnenen analogen Signal, insbesondere mittels analoger Operationsverstärker, Addierer, Multiplizierer und Subtrahierer ermittelt werden. Diese Ausführung des Verfahrens hat gegenüber bisherigen digitalen Verfahren den großen Vorteil eines deutlich verbesserten Signal-zu-Rausch-Verhältnisses und ermöglicht damit eine Absenkung der bisher einhergehenden Geräuschentwicklung.

Die analog gewonnenen Einträge der magnetischen Anisotropie werden als solche zum Erhalt eines für die Regelung und/oder Steuerung erforderlichen digitalen Signals vor einem A/D-Wandler verstärkt, so dass der Wandlungsbereich des A/D-Wandlers vollständig ausgenutzt werden kann, und insbesondere auch ein vergleichsweise günstiger A/D-Wandler mit niedriger Auflösung eingesetzt werden kann. Bei einer Digitalisierung der analogen Stromantwort hängt das Signal-zu-Rausch-Verhältnis (SRV) vom Anteil des Nutzsignals im Messsignal ab. Da die akustische Geräuschentwicklung durch die Injektion der Spannungen die Anwendbarkeit Anisotropie-basierter Verfahren in der Praxis einschränkt, ist die Injektion generell so klein wie möglich, aber doch mindestens so groß zu halten, dass das erforderliche SRV im Anisotropie-Signal gewährleistet ist. Die Injektionsantwort als Informationsquelle ist jedoch nur ein Bruchteil des A/D-Wandlungsbereichs der Strommessung. Erfordert die Anwendung beispielsweise ein SRV im Anisotropie-Signal von üblicherweise 2:1, so ergibt sich dieses Verhältnis bei einem üblichen Anisotropieverhältnis der Maschine von 10%, einer üblichen Auslegung des Wandlungsbereichs des A/D-Wandlers auf den 4-fachen Nennstrom der Maschine und einer üblichen effektiven Auflösung des A/D-Wandlers von 11bit (Quelle des Rauschens) erst bei einer nötigen Amplitude der Injektionsantwort (Stromwelligkeit zur Anisotropie-Identifikation) von etwa 4% des Nennstroms der Maschine

$$\left(\frac{4}{2^{11}} \cdot \frac{2:1}{10\%}\right).$$ Dies ist in den meisten Fällen deutlich hörbar und somit störend.

Bei einer analogen Ermittlung der Einträge der magnetischen Anisotropie, welche erst durch die Einfachheit der Gleichungen der Erfindung möglich wird, findet die Auflösung des A/D-Wandlers direkte Anwendung auf das Anisotropie-Signal selbst. Das SRV im digitalisierten Anisotropie-Signal ergibt damit unabhängig von der Auslegung des Strommessbereichs und vom Anisotropieverhältnis auch bei Verwendung eines günstigen A/D-Wandlers mit niedriger Auflösung deutlich höhere Werte als es bei digitaler Berechnung möglich ist. Daher kann in einer hierzu vorteilhaften Weiterbildung die Injektionsamplitude weiter abgesenkt werden, und zwar derart, dass die Spannungsvektoren mit einem Betrag nach Abzug des gemeinsamen Mittelwerts von wenigstens 0,1% des Betrags einer maximalen Stellspannung, insbesondere zwischen 0,5 V und 10 V, gewählt werden. Mit anderen Worten ist gegenüber rein digitalen Ermittlungsverfahren eine Absenkung der Injektionsamplitude um 90% ermöglicht. Die einhergehende Absenkung der Geräuschentwicklung führt damit zu einer Überwindung eines wesentlichen Nachteils Anisotropie-basierter Verfahren.

Die Erfindung betrifft weiter eine Vorrichtung zur Steuerung und/oder Regelung einer Drehfeldmaschine, umfassend einen Stator und einen Rotor, mit einem steuerbaren PWM-Umrichter zur Ausgabe von getakteten Klemmspannungen, mit einer Einrichtung zur Erfassung einer Anzahl von Phasenströmen und mit einem Controller zur Ansteuerung des PWM-Umrichters, der zur Durchführung des vorstehend beschriebenen Verfahrens ausgebildet ist.

Des Weiteren betrifft die Erfindung auch eine Drehfeldmaschine, umfassend einen Stator und einen Rotor, mit einer derartigen Vorrichtung zur Steuerung und/oder Regelung.

Die für das Verfahren und dessen Weiterbildungen genannten Vorteile lassen sich hierbei sinngemäß auf das Verfahren zur Steuerung und/oder Regelung einer Drehfeldmaschine und auf eine Drehfeldmaschine mit einer entsprechend eingerichteten Vorrichtung zur Steuerung und/oder Regelung übertragen.

Ausführungsbeispiele der Erfindung werden durch die nachfolgende Beschreibung sowie durch eine Zeichnung näher erläutert. Dabei zeigen:

Fig. 1    den geometrischen Zusammenhang zwischen den Spannungsvektoren U1-U4 in einem kartesischen statorfesten Koordinatensystem,

Fig. 2    die Rotation des anisotropen Anteils der Stromantwort um den isotropen Anteil der Stromantwort,

Fig. 3    aus einem Experiment den zeitlichen Verlauf ausgewerteter Einträge des Anisotropie-Vektors gegenüber dem zeitlichen Verlauf des gemessenen Rotorwinkels,

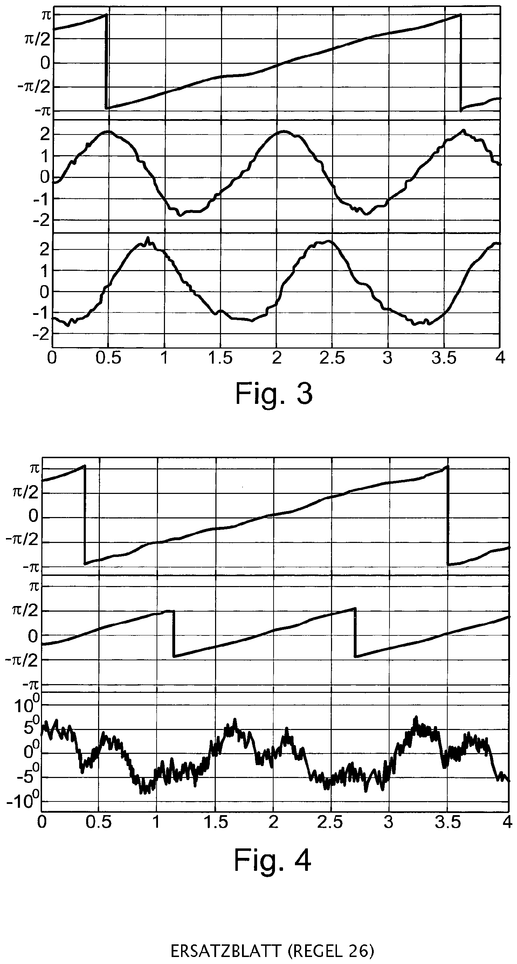

Fig: 4    den aus den Einträgen gemäß Fig. 3 ermittelten zeitlichen Verlauf des Rotorwinkels gegenüber dem zeitlichen Verlauf des gemessenen Rotorwinkels,

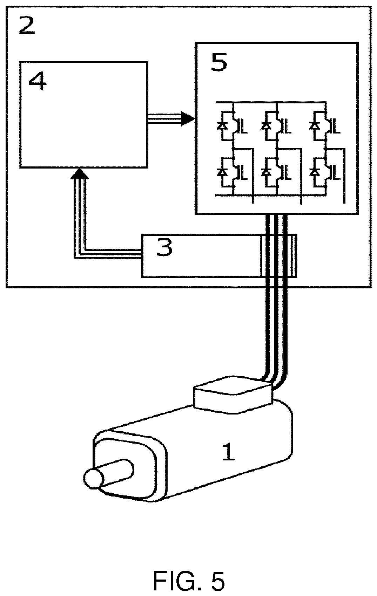

Fig. 5    schematisch ein Regelschaltbild für eine Drehfeldmaschine und

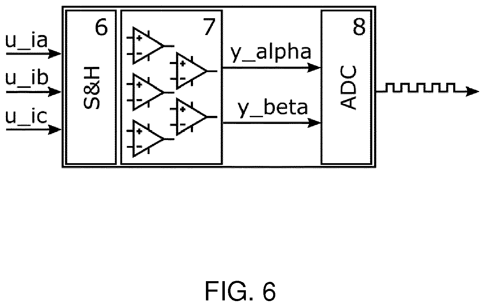

Fig. 6    schematisch ein Schaltungsbild zu einer analogen Ermittlung der Einträge der magnetischen Anisotropie einer Drehfeldmaschine.

Den im Verlauf dieses Dokuments aufgeführten Gleichungen liegt die folgende Nomenklatur zugrunde:

| Symbol | Größe | Index | Bedeutung |
|--------|-------|-------|-----------|
| $u$ | Spannung | $s$ | Stator |
| $i$ | Strom | $r$ | Rotor |
| $\theta$ | Winkel | $u$ | Spannung |
| $\omega$ | Drehzahl | $a$ | Anisotropie |
| $t$ | Zeit | $\Sigma, m$ | Mittelwert |
| $R$ | Widerstand | $\Delta$ | Differenz |
| $L$ | Induktivität | $\Delta^2$ | Differenz zwischen Differenzen |
| $Y$ | "Admittanz" | | |
| $\psi$ | Flussverkettung | | |

Symbole in normaler Schreibweise beschreiben Skalare, d.h. eindimensionale Größen. Kleine Symbole in kursiv-fetter Schreibweise beschreiben Vektoren der Dimension 2x1. Große Symbole in fetter Schreibweise (nicht kursiv) beschreiben Matrizen der Dimension 2x2 oder größer.

Das Superskript (hochgestellt) gibt an, in welchen Koordinaten eine mehrdimensionale Größe dargestellt ist. Das Subskript (tiefgestellt) beschreibt die Größe genauer (z.B. bezieht sich "m" auf einen Mittelwert oder "s" auf die Statorwicklung).

Zeitdiskrete Anisotropie-Verfahren beruhen auf einer zeitdiskreten Form der Spannungsgleichung der Maschine, die hier beispielhaft für eine Permanentmagnet (PM) Synchronmaschine gegeben wird

$$\boldsymbol{u}_s^s \quad = R_s \boldsymbol{i}_s^s + \mathbf{L}_s^s \frac{\Delta \boldsymbol{i}_s^s}{\Delta t} + \mathbf{J}\omega\boldsymbol{\psi}_{pm}^s. \tag{1}$$

Hierbei ist $u_s^s$ die Spannung (u) an der Statorwicklung (Subskript s) in Statorkoordinaten (Superskript s, d.h. Vektor mit zwei Dimensionen), $R_s$ der Widerstand der Statorwicklung, $i_s^s$ der Statorstrom in Statorkoordinaten und $\psi_{pm}^s$ die PM-Flussverkettung in Statorkoordinaten, und $\Delta t$ die Abtastzeit. $\mathbf{L}_s^s(\theta)$ ist die Induktivität der Statorwicklung in Statorkoordinaten und bildet wegen ihrer lageabhängigen Anisotropie die Informationsquelle bei kleinen Drehzahlen.

Zur Auswertung der Anisotropie wird die Stromantwort auf eine hochfrequente Spannungsanregung (sog. Injektion) betrachtet und dazu die Spannungsgleichung (1) nach der Stromantwort umgestellt

$$\Delta \boldsymbol{i}_s^s \quad = \mathbf{Y}_s^s \left( \boldsymbol{u}_s^s - R_s \, \boldsymbol{i}_s^s - \mathbf{J}\omega\boldsymbol{\psi}_{pm}^s \right). \tag{2}$$

Hierbei wird anstatt der Induktivität nun $\mathbf{Y}_s^s$, das Produkt aus ihrer Inversen und der Abtastzeit $\Delta t$ verwendet, welches (wie auch $\mathbf{L}_s^s$) eine 2x2 Matrix mit drei variablen Einträgen ist (die Energieerhaltung fordert gleiche Koppeleinträge)

$$\mathbf{Y}_s^s(\theta) \quad = \mathbf{L}_s^{s-1}(\theta)\, \Delta t = \begin{bmatrix} Y_{\alpha\alpha}(\theta) & Y_{\alpha\beta}(\theta) \\ Y_{\alpha\beta}(\theta) & Y_{\beta\beta}(\theta) \end{bmatrix}. \tag{3}$$

Diese häufig als "Admittanz" bezeichnete Größe $Y_s^s$ weist die gleiche Lageabhängigkeit auf wie $\mathbf{L}_s^s$ und kann deshalb zur Winkelschätzung herangezogen werden. Im Speziellen wird für die Lageabhängigkeit der Einträge von $Y_s^s$ in allen grundlegenden Verfahren die einfachst-mögliche Variante angenommen

$$\mathbf{Y}_s^s \quad = \begin{bmatrix} \dfrac{1}{L_d}\cos^2\theta + \dfrac{1}{L_q}\sin^2\theta & \left(\dfrac{1}{L_d}-\dfrac{1}{L_q}\right)\sin\theta\cos(\theta) \\[2ex] \left(\dfrac{1}{L_d}-\dfrac{1}{L_q}\right)\sin\theta\cos(\theta) & \dfrac{1}{L_d}\sin^2\theta + \dfrac{1}{L_q}\cos^2\theta \end{bmatrix} \quad (4)$$

$$= Y_\Sigma \begin{bmatrix} 1 & 0 \\ 0 & 1 \end{bmatrix} + Y_\Delta \begin{bmatrix} \cos 2\theta & \sin 2\theta \\ \sin 2\theta & -\cos 2\theta \end{bmatrix}. \quad (5)$$

Darin ist $L_d$ die Induktivität in Richtung des Permanentmagneten (PM) und $L_q$ die Induktivität quer zum Perma-nentmagneten, $Y_\Sigma = \dfrac{\frac{1}{L_d}+\frac{1}{L_q}}{2}$ ist die mittlere Admittanz und $Y_\Delta = \dfrac{\frac{1}{L_d}-\frac{1}{L_q}}{2}$ der Betrag der Anisotropie. Für die Matrix $\begin{bmatrix} \cos 2\theta & \sin 2\theta \\ \sin 2\theta & -\cos 2\theta \end{bmatrix}$ wird im Folgenden auch die Kurzbezeichnung $\mathbf{S}(\theta)$ verwendet. Der Term $Y_\Delta \mathbf{S}(\theta)$ wird hier und im Folgenden und wie in der Fachwelt üblich als die magnetische Anisotropie bezeichnet. Bei einer anisotropen Induk-tivität gilt $L_d \neq L_q$, bzw. $Y_\Delta \neq 0$. Der Winkel $\theta$ ist der Anisotropie-Winkel und gleicht im Idealfall dem Rotorwinkel. Über zwei Einträge der magnetischen Anisotropie, wie z.B. ihrem linken Spaltenvektor, der später auch als Anisotropievektor $y_a^s$ bezeichnet ist, lässt sich der Anisotropie-Winkel eindeutig bestimmen.

Die algorithmische Herausforderung Anisotropie-basierter Verfahren ist es also, die Spannungsgleichung (2) soweit aufzuschlüsseln, dass der in der Induktivität verborgene Winkel $\theta$ ermittelt werden kann. In allen bekannten Verfahren wird dies über mindestens zwei Berechnungsstufen realisiert, die im Folgenden gesondert betrachtet werden. Unterschiede zwischen Anisotropie- und Rotorwinkel können sättigungsbedingt (Winkeloffset unter Last) oder geometriebedingt (Harmonische Abweichung bei Rotordrehung) auftreten, was für die weiteren Betrachtungen jedoch nicht weiter relevant ist.

Erste Stufe: Eliminierung der Grundwelle

Um die Induktivität zu identifizieren, müssen alle übrigen Terme der Spannungsgleichung (2) ausgelöscht werden. Dazu wird die Annahme getroffen, dass sich diese als Grundwelle bezeichneten Terme innerhalb der relevanten Zeitspanne (meist ein Injektionsintervall) nur in vernachlässigbarem Maße ändern. Sie werden also als konstant angesehen und mittels Differenzenbildung eliminiert

$$\Delta^2 \boldsymbol{i}_s^s \quad = \Delta \boldsymbol{i}_s^s[k] - \Delta \boldsymbol{i}_s^s[k-1] \quad (6)$$

$$= \mathbf{Y}_s^s\,\boldsymbol{u}_s^s[k] - \mathbf{Y}_s^s\left(R_s\,\boldsymbol{i}_s^s + \mathbf{J}\omega\boldsymbol{\psi}_{pm}^s\right) - \mathbf{Y}_s^s\,\boldsymbol{u}_s^s[k-1] + \mathbf{Y}_s^s\left(R_s\,\boldsymbol{i}_s^s + \mathbf{J}\omega\boldsymbol{\psi}_{pm}^s\right) \quad (7)$$

$$= \mathbf{Y}_s^s\left(\boldsymbol{u}_s^s[k] - \boldsymbol{u}_s^s[k-1]\right) \quad (8)$$

$$= \mathbf{Y}_s^s\Delta\boldsymbol{u}_s^s. \quad (9)$$

Das Resultat dieser ersten Stufe ist folglich der direkte Zusammenhang zwischen Spannung und Stromantwort, der ausschließlich durch die anisotrope Admittanz $\mathbf{Y}_s^s$ beschrieben ist.

Zweite Stufe: Aufschlüsselung der Induktivität/Admittanz

Ausgangspunkt der zweiten Stufe ist der direkte Zusammenhang zwischen Spannung und Stromantwort

$$\Delta^2 \boldsymbol{i}_s^s \quad = \mathbf{Y}_s^s(\theta)\,\Delta\boldsymbol{u}_s^s. \quad (10)$$

Da $\mathbf{Y}_s^s$ gemäß (3)-(5) drei Unbekannte enthält, ist diese zweidimensionale Vektorgleichung selbst unterbestimmt. Die Admittanz $\mathbf{Y}_s^s$ kann also immer nur aus mindestens 2 Stromantworten aufgeschlüsselt werden. An diesem Punkt unterscheiden sich die Verfahren nach Stand der Technik.

INFORM:

In der 1988 von Prof. Schroedl vorgeschlagenen Methode einer indirekten Flusserfassung durch On-line Reaktanz-Messung nach EP 0 579 694 A1 oder M. Schroedl, "Operation of the permanent magnet synchronous machine without a mechanical sensor," Conf. Power Electronics and Variable-Speed Drives, pp. 51-56, 1990; F. De Belie, T. Vyncke und J. Melkebeek, "Parameterless Rotor Position Estimation in a Direct-Torque Controlled Salient-Pole PMSM without Using Additional Test Signal," IEEE Conf. ICEM, pp. 1-6, 2010 (kurz INFORM) bilden 3 Pulse in die 3 Richtungen der Phasenachsen die Spannungsanregung $\Delta \boldsymbol{u}_s^s$. Zur Aufschlüsselung der Admittanz wird die Stromantwort in Phasenrichtung (d.h. Spannungsrichtung) betrachtet und in Parallel- und Queranteil zerlegt. Anschließend werden beide Anteile in Statorkoordinaten separat vektoriell addiert und ergeben jeweils einen Vektor der im Winkel $2\theta$ ausgerichtet ist.

Dieser zweidimensionale Anisotropie-Ergebnisvektor kann im Idealfall mittels der atan2()-Funktion direkt ausgewertet werden. Im Falle eines komplizierteren Maschinenverhaltens bildet er die Eingangsgröße für harmonische Entkopplungsverfahren.

Der Rechenaufwand von INFORM besteht im Wesentlichen in den für die Transformation der Stromantwort nach Spannungskoordinaten und zurück erforderlichen Multiplikationen.

SATZ DES THALES:

Nachdem sich die Fachwelt nach INFORM über Jahrzehnte auf modulationsbasierte Verfahren fokussierte, veröffentlichte Frederik De Belie im Jahr 2010 einen Ansatz, der den Satz des Thales nutzte, um aus zwei Stromantworten in Spannungskoordinaten den Anisotropie-Winkel direkt zu berechnen (siehe hierzu: F. De Belie, T. Vyncke und J. Melkebeek, "Parameterless Rotor Position Estimation in a Direct-Torque Controlled Salient-Pole PMSM without Using Additional Test Signal," IEEE Conf. ICEM, pp. 1-6, 2010; US 20100327789 A1).

Im Unterschied zu INFORM kann dieser Ansatz den Anisotropiewinkel $\theta$ auch auf Basis eines nicht fest vorgegebenen Pulsmusters berechnen, aber benötigt hierfür zusätzlich den Spannungswinkel $\theta_u$.

Hinsichtlich des Rechenaufwandes benötigt dieser Ansatz eine Transformation in beliebige Spannungskoordinaten. Während Transformationen in feste Koordinaten mit vorausberechneten konstanten Faktoren realisierbar sind, erfordert eine veränderliche Transformation mindestens eine zusätzliche Division. Divisionen zählen zu den zeitaufwändigsten Rechenoperationen - sie liegen in der gleichen Größenordnung wie die zusätzliche Spannungswinkel-Berechnung.

Darüber hinaus eignet sich dieser Ansatz nur zur Anisotropie-Winkelberechnung und nicht für nachgeschaltete Entkopplungsverfahren, da der hierfür notwendige Anisotropievektor als Zwischenergebnis nicht vorliegt.

MATRIX INVERSION:

Ein 2011 von Prof. Sul vorgeschlagener Ansatz (Siehe z.B. S. Kim, Y.-C. Kwon, S.-K. Sul, J. Park und S.-M. Kim, "Position Sensorless Operation of IPMSM with Near PWM Switching Frequency Signal Injection," IEEE Conf. ICPE - ECCE Asia, pp. 1660-1665, 2011) verfolgt eine andere Möglichkeit zur Lösung der Unterbestimmtheit von Gleichung (10). Es werden 2 aufeinander folgende Spannungen zur Matrix $\mathbf{U}_s^s$ und die zugehörigen Stromantworten zu Matrix $\mathbf{I}_s^s$ verkettet

$$\mathbf{U}_s^s = [\Delta \boldsymbol{u}_1^s \quad \Delta \boldsymbol{u}_2^s]. \tag{11}$$

$$\mathbf{I}_s^s = [\Delta^2 \boldsymbol{i}_1^s \quad \Delta^2 \boldsymbol{i}_2^s]. \tag{12}$$

Da für beide Spannungen näherungsweise der gleiche Rotorwinkel existiert, bildet $\mathbf{Y}_s^s$ den Zusammenhang zwischen beiden Spaltenvektoren von $U_s^s$ und $I_s^s$ und führt damit zu einer nicht mehr unterbestimmten Matrixmultiplikation

$$\mathbf{I}_s^s = \mathbf{Y}_s^s(\theta)\,\mathbf{U}_s^s. \tag{13}$$

Mittels Matrix-Inversion kann (13) nun nach $\mathrm{Y}_s^s$ umgestellt

$$\mathrm{Y}_s^s(\theta) = I_s^s\, U_s^{s-1} \tag{14}$$

und auf die lageabhängigen Komponenten von $\mathrm{Y}_s^s$ direkt zugegriffen werden. Gemäß (3) ergeben die Subtraktionen

$$Y_{\alpha\alpha} - Y_{\beta\beta} = 2Y_\Delta \cos 2\theta \tag{15}$$

$$Y_{\alpha\beta} + Y_{\beta\alpha} = 2Y_\Delta \sin 2\theta \tag{16}$$

$$\boldsymbol{y}_a^s = \frac{1}{2}\begin{bmatrix} Y_{\alpha\alpha} - Y_{\beta\beta} \\ Y_{\alpha\beta} + Y_{\beta\alpha} \end{bmatrix} \tag{17}$$

dabei den Anisotropievektor für Entkopplungsverfahren, der im einfachen Fall komponentenweise per atan2() ausgewertet werden kann.

Hinsichtlich des Rechenaufwandes ist die Matrix-Inversion selbst nicht kritisch, da es sich im Falle einer 2x2 Matrix lediglich um eine vorzeichenbehaftete Vertauschung der Komponenten handelt. Die Skalierung mit der inversen Determinante kann im Falle einer einfachen Winkelberechnung schlichtweg übersprungen werden. Der Rechenaufwand ergibt sich damit primär aus den 8 Multiplikationen und 4 Additionen, die von der Matrix-Multiplikation in (14) benötigt werden. Damit gehört dieses Verfahren unter den bislang beschriebenen zu den rechensparsamsten.

ARBITRARY INJECTION:

Der Ansatz zu "Arbitrary Injection" stammt aus der Prädiktiven Drehmomentregelung gemäß P. Landsmann, D. Paulus, P. Stolze und R. Kennel, "Saliency based encoderless predictive torque control without signal injection," IEEE Conf. IPEC, pp. 3029-3034, 2010 und wurde 2011 nach D. Paulus, P. Landsmann und R. Kennel, "Sensorless Field-oriented Control for Permanent Magnet Synchronous Machines with an Arbitrary Injection Scheme and Direct Angle Calculation," IEEE Conf. SLED, pp. 41-46, 2011 auf die feldorientierte Regelung übertragen. Das modellbasierte, parameterfreie Verfahren wurde mit dem Ziel entwickelt, jede Spannungsanregung (inkl. der des Stromreglers) zur Anisotropie-basierten Lageschätzung auszunutzen, um den Einsatz von Injektion weitgehend zu vermeiden. Es wird dazu der sog. Prädiktionsfehler $\boldsymbol{e}_{prd}^s$ als Zwischengröße eingeführt, um den isotropen Anteil der Stromantwort zu eliminieren

$$\boldsymbol{e}_{prd}^s = \Delta^2 \boldsymbol{i}_s^s - Y_\Sigma\,\Delta\boldsymbol{u}_s^s. \tag{18}$$

$$= Y_\Delta \begin{bmatrix} \cos 2\theta & \sin 2\theta \\ \sin 2\theta & -\cos 2\theta \end{bmatrix} \Delta\boldsymbol{u}_s^s. \tag{19}$$

Aus der zweifachen Winkelabhängigkeit des Prädiktionsfehlers (19) kann nun sowohl der Anisotropievektor

$$\boldsymbol{y}_a^s = \begin{bmatrix} u_\alpha e_\alpha - u_\beta e_\beta \\ u_\alpha e_\beta + u_\beta e_\alpha \end{bmatrix} \frac{1}{u_\alpha^2 + u_\beta^2} \tag{20}$$

als auch für den einfachen Fall der Anisotropie-Winkel berechnet werden

$$\theta = \frac{1}{2} \text{atan} \left( \frac{u_\alpha e_\beta + u_\beta e_\alpha}{u_\alpha e_\alpha - u_\beta e_\beta} \right). \tag{21}$$

Die Multiplikation mit dem inversen Betragsquadrat der Spannung in (20), die eine Division erfordert, ist zwar bei der einfachen Winkelauswertung (21) nicht erforderlich, wird aber für die Berechnung von $Y_\Sigma$ ohnehin benötigt. Für die Berechnung von $Y_\Sigma$ gibt es verschieden rechenaufwändige Varianten, die davon abhängen, welche Annahmen bezüglich der Injektion getroffen werden können. In jedem Fall ist eine Transformation nach Spannungskoordinaten und ungünstigsten Fall eine zweite Division erforderlich.

Damit ist Arbitrary Injection mit ein bis zwei erforderlichen Divisionen das rechenaufwändigste Verfahren, was seinen Eigenschaften hinsichtlich Injektions-Freiheit als Nachteil gegenüber steht.

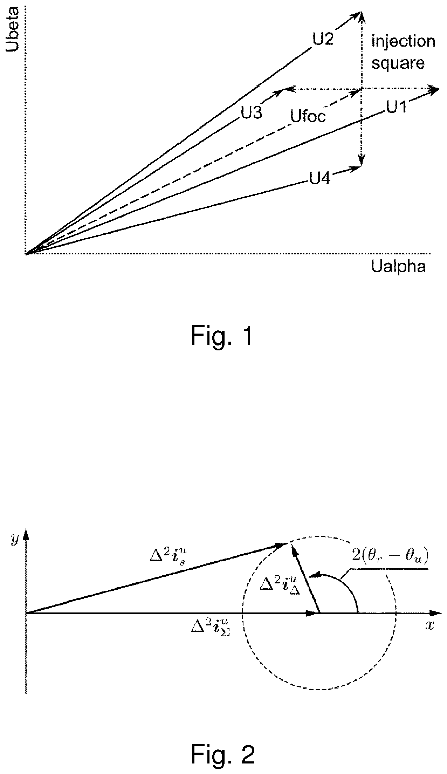

Für ein Ausführungsbeispiel der vorliegend beschriebenen Erfindung wird das Injektionsmuster als Quadrat definiert. Die tatsächliche zeitliche Reihenfolge des Injektionsmusters ist irrelevant. Wichtig ist lediglich das Vorhandensein aller vier Spannungen. Bei vertauschter Reihenfolge müssen lediglich die Terme zur Auswertung vertauscht werden. Aus Fig. 1 wird dieses Muster ersichtlich. Nacheinander werden die vier Spannungsvektoren U1, U2, U3, U4 gestellt. In Raumzeigerdarstellung sind diese vier Spannungsvektoren derart gewählt, dass diese nach Abzug ihres gemeinsamen Mittelwerts alle denselben Betrag aufweisen und jeweils paarweise zueinander antiparallel oder orthogonal stehen. Mit anderen Worten ergibt sich hierdurch eine Quadrat-Injektion. Die vier Spannungsvektoren spannen nach vektoriellem Abzug des gemeinsamen Mittelwerts in der Raumzeigerdarstellung ein Quadrat auf. Der gemeinsame Mittelwert entspricht dem für das Injektionsintervall durch eine Steuerung oder Regelung vorgegebenen Sollwert des Spannungswerts der Klemmspannungen. Die das Quadrat aufspannenden Vektoren entsprechen damit den Injektionsspannungen. Vorliegend liegen diese vier Injektionsspannungen zudem parallel oder antiparallel zu den Achsen des Koordinatensystems, welches als statorfestes Koordinatensystem gewählt ist.

Mit den vorstehend beschriebenen vier Spannungsvektoren können die vier Injektionsspannungen im statorfesten Koordinatensystem geschrieben werden als

$$\mathbf{U}_{inj}^s = \begin{bmatrix} 1 & 0 & -1 & 0 \\ 0 & 1 & 0 & -1 \end{bmatrix} u_{inj}, \tag{22}$$

womit sich nach (2) und unter der Annahme innerhalb eines Injektionsintervalls nahezu konstanter Grundwellenterme die folgenden Stromanstiege ergeben

$$\Delta \mathbf{I}_s^s = \mathbf{Y}_s^s \mathbf{U}_{inj}^s + \mathbf{Y}_s^s \left( \boldsymbol{u}_{foc}^s - R_s \boldsymbol{i}_s^s - \mathbf{J}\omega \boldsymbol{\psi}_{pm}^s \right) [1 \quad 1 \quad 1 \quad 1] \tag{23}$$

$$= \Delta \mathbf{I}_u^s + \Delta \boldsymbol{i}_{fm}^s [1 \quad 1 \quad 1 \quad 1] \tag{24}$$

$$= \begin{bmatrix} \Delta i_{\alpha 0} & \Delta i_{\alpha 1} & \Delta i_{\alpha 2} & \Delta i_{\alpha 3} \\ \Delta i_{\beta 0} & \Delta i_{\beta 1} & \Delta i_{\beta 2} & \Delta i_{\beta 3} \end{bmatrix}. \tag{25}$$

Die Stromantwort wird für jede Injektionsspannung als korrespondierende Änderung des Stromvektors erfasst bzw. beschrieben. Die jeweiligen Spalteneinträge stellen die jeweilige Stromantwort auf die entsprechende Injektionsspannung dar

Da das Injektionsmuster mittelwertfrei ist, lässt sich die Grundwelle durch Mittelwertbildung berechnen

$$\Delta \boldsymbol{i}_m^s = \frac{1}{4} \begin{bmatrix} \Delta i_{\alpha 0} + \Delta i_{\alpha 1} + \Delta i_{\alpha 2} + \Delta i_{\alpha 3} \\ \Delta i_{\beta 0} + \Delta i_{\beta 1} + \Delta i_{\beta 2} + \Delta i_{\beta 3} \end{bmatrix} = \begin{bmatrix} \Delta i_{m\alpha} \\ \Delta i_{m\beta} \end{bmatrix} \approx \Delta \boldsymbol{i}_{fm}^s \tag{26}$$

und wird zur Ermittlung der Injektionsantwort $\Delta I_u^s$ von der Gesamt-Stromantwort abgezogen

$$\Delta \mathbf{I}_u^s = \Delta \mathbf{I}_s^s - \Delta i_m^s [1 \quad 1 \quad 1 \quad 1] \tag{27}$$

$$= \left(Y_\Sigma + Y_\Delta \mathbf{S}(\theta_a)\right) \begin{bmatrix} 1 & 0 & -1 & 0 \\ 0 & 1 & 0 & -1 \end{bmatrix} u_{inj} \tag{28}$$

$$= \begin{bmatrix} \Delta i_{u\alpha 0} & \Delta i_{u\alpha 1} & \Delta i_{u\alpha 2} & \Delta i_{u\alpha 3} \\ \Delta i_{u\beta 0} & \Delta i_{u\beta 1} & \Delta i_{u\beta 2} & \Delta i_{u\beta 3} \end{bmatrix}. \tag{29}$$

Dies ist der direkte Zusammenhang zwischen der Spannungsinjektion und der Stromantwort. Das Subskript u beschreibt den unmittelbaren Bezug auf die Spannung. Da alle Injektionsspannungen direkt auf den Stator-Koordinatenachsen liegen, haben die Einträge der in Spannungskoordinaten transformierenden Drehmatrix entweder einen Wert von 0, 1 oder -1. Der Stromanstieg in Spannungskoordinaten $\Delta I_u^u$ ergibt sich somit durch einfaches Vertauschen der Komponenten.

$$\Delta \mathbf{I}_u^u = \begin{bmatrix} +\Delta i_{u\alpha 0} & +\Delta i_{u\beta 1} & -\Delta i_{u\alpha 2} & -\Delta i_{u\beta 3} \\ +\Delta i_{u\beta 0} & -\Delta i_{u\alpha 1} & -\Delta i_{u\beta 2} & +\Delta i_{u\alpha 3} \end{bmatrix} \tag{30}$$

und damit der mittlere Stromanstieg in Spannungskoordinaten als

$$\Delta i_\Sigma^u = \frac{1}{4}\begin{bmatrix} +\Delta i_{u\alpha 0} + \Delta i_{u\beta 1} - \Delta i_{u\alpha 2} - \Delta i_{u\beta 3} \\ +\Delta i_{u\beta 0} - \Delta i_{u\alpha 1} - \Delta i_{u\beta 2} + \Delta i_{u\alpha 3} \end{bmatrix} = \begin{bmatrix} \Delta i_{\Sigma x} \\ \Delta i_{\Sigma y} \end{bmatrix}. \tag{31}$$

Dieser mittlere Stromanstieg $\Delta i_\Sigma^u$ repräsentiert den isotropen Anteil der Injektionsantwort $\Delta I_u^s$, um den sich die lageabhängige Rotation des Anisotropievektors ausbildet. Dies wird geometrisch aus Fig. 2 ersichtlich. In Vektoraddition rotiert der anisotrope Anteil der Stromantwort um den isotropen Anteil der Stromantwort.
Es lässt sich also durch gerichtete Subtraktion der isotropen Stromantwort in Statorkoordinaten die anisotrope Stromantwort in Statorkoordinaten berechnen

$$\Delta \mathbf{I}_a^s = \begin{bmatrix} \Delta i_{u\alpha 0} - \Delta i_{\Sigma x} & \Delta i_{u\alpha 1} + \Delta i_{\Sigma y} & \Delta i_{u\alpha 2} + \Delta i_{\Sigma x} & \Delta i_{u\alpha 3} - \Delta i_{\Sigma y} \\ \Delta i_{u\beta 0} - \Delta i_{\Sigma y} & \Delta i_{u\beta 1} - \Delta i_{\Sigma x} & \Delta i_{u\beta 2} + \Delta i_{\Sigma y} & \Delta i_{u\beta 3} + \Delta i_{\Sigma x} \end{bmatrix} \tag{32}$$

$$= Y_\Delta \mathbf{S}(\theta_a) \begin{bmatrix} 1 & 0 & -1 & 0 \\ 0 & 1 & 0 & -1 \end{bmatrix} u_{inj} \tag{33}$$

$$= Y_\Delta \begin{bmatrix} +\cos 2\theta_a & +\sin 2\theta_a & -\cos 2\theta_a & -\sin 2\theta_a \\ +\sin 2\theta_a & -\cos 2\theta_a & -\sin 2\theta_a & +\cos 2\theta_a \end{bmatrix} u_{inj} \tag{34}$$

$$= \begin{bmatrix} \Delta i_{a\alpha 0} & \Delta i_{a\alpha 1} & \Delta i_{a\alpha 2} & \Delta i_{a\alpha 3} \\ \Delta i_{a\beta 0} & \Delta i_{a\beta 1} & \Delta i_{a\beta 2} & \Delta i_{a\beta 3} \end{bmatrix}. \tag{35}$$

Um nun also einen 2-fach rotierenden Vektor zu erhalten, kann entweder nur die erste Spalte ausgewertet werden, oder es können zur optimalen Ausnutzung des Signal-zu-Rausch-Verhältnisses (SNR) die gleichen Terme aller Spalten entsprechend addiert werden

$$\begin{bmatrix} \Delta i_{a\alpha 0} \\ \Delta i_{a\beta 0} \end{bmatrix} = Y_\Delta \begin{bmatrix} +\cos 2\theta_a \\ +\sin 2\theta_a \end{bmatrix} u_{inj} = \mathbf{y}_a^s \, u_{inj} \tag{36}$$

$$4\, \boldsymbol{y}_a^s\, u_{inj} \;=\; \begin{bmatrix} \Delta i_{a\alpha 0} - \Delta i_{a\beta 1} - \Delta i_{a\alpha 2} + \Delta i_{a\beta 3} \\ \Delta i_{a\beta 0} + \Delta i_{a\alpha 1} - \Delta i_{a\beta 2} - \Delta i_{a\alpha 3} \end{bmatrix} \qquad (37)$$

Damit sind die Einträge des Anisotropie-Vektors $\boldsymbol{y}_a^s$ und damit der Anisotropie der Induktivität der Drehfeldmaschine gem. Gleichung (5) identifiziert. Die Vektoren gemäß Gleichung (36) und (37) lassen sich im einfachen Fall weiter per atan2() auswerten oder bei komplexeren Maschinen entsprechend an ein Entkopplungsverfahren übergeben. Zur Auswertung durch ein Entkopplungsverfahren ist keine Division durch den Spannungsbetrag notwendig, sondern höchstens eine Skalierung mit dem konstanten Faktor $\frac{1}{u_{inj}}$ bzw. $\frac{1}{4u_{inj}}$.

Durch Erfassung der Stromantwort auf die vier Spannungsvektoren bzw. Injektionssannungen in Statorkoordinaten gem. Gleichungen (23) bzw. (25) kann also mit einem geringen Aufwand an Rechenoperationen auf die Einträge der Anisotropie der Induktivität geschlossen werden. In der bisherigen Herleitung wurden zur Berechnung des Anisotropievektors $\boldsymbol{y}_a^s$ ausschließlich Additionen, Subtraktionen und Multiplikationen mit $\frac{1}{4}$ (die sich bei Festkomma-Operationen durch einen zweifachen Rechts-Shift realisieren lassen) verwendet.

Gemäß eines weiteren Ausführungsbeispiels lässt sich die Berechnung des Anisotropie-Vektors $\boldsymbol{y}_a^s$ aber noch deutlich weiter vereinfachen, wenn die eingeführten Terme $\Delta i_{axx}$ und $\Delta i_{uxx}$ ausgeschrieben werden.

In einem ersten Schritt wird $\Delta i_{axx}$ in (37) gemäß seiner Definition in (32) ausgeschrieben

$$4\, u_{inj}\, \boldsymbol{y}_a^s \;=\; \begin{bmatrix} (\Delta i_{u\alpha 0} - \Delta i_{\Sigma x}) - (\Delta i_{u\beta 1} - \Delta i_{\Sigma x}) - (\Delta i_{u\alpha 2} + \Delta i_{\Sigma x}) + (\Delta i_{u\beta 3} + \Delta i_{\Sigma x}) \\ (\Delta i_{u\beta 0} - \Delta i_{\Sigma y}) + (\Delta i_{u\alpha 1} + \Delta i_{\Sigma y}) - (\Delta i_{u\beta 2} + \Delta i_{\Sigma y}) - (\Delta i_{u\alpha 3} - \Delta i_{\Sigma y}) \end{bmatrix} \;(38)$$

$$= \begin{bmatrix} \Delta i_{u\alpha 0} - \Delta i_{u\beta 1} - \Delta i_{u\alpha 2} + \Delta i_{u\beta 3} \\ \Delta i_{u\beta 0} + \Delta i_{u\alpha 1} - \Delta i_{u\beta 2} - \Delta i_{u\alpha 3} \end{bmatrix} - \begin{bmatrix} \Delta i_{\Sigma x} - \Delta i_{\Sigma x} + \Delta i_{\Sigma x} - \Delta i_{\Sigma x} \\ \Delta i_{\Sigma y} - \Delta i_{\Sigma y} + \Delta i_{\Sigma y} - \Delta i_{\Sigma y} \end{bmatrix} \qquad (39)$$

$$= \begin{bmatrix} \Delta i_{u\alpha 0} - \Delta i_{u\beta 1} - \Delta i_{u\alpha 2} + \Delta i_{u\beta 3} \\ \Delta i_{u\beta 0} + \Delta i_{u\alpha 1} - \Delta i_{u\beta 2} - \Delta i_{u\alpha 3} \end{bmatrix}. \qquad (40)$$

Der isotrope Teil der Stromantwort kürzt sich implizit selbst, sodass eine gesonderte Berechnung von $\Delta \boldsymbol{i}_\Sigma^u$ nicht erforderlich ist und direkt mit den entsprechend vertauschten Komponenten der Injektionsantwort $\Delta \boldsymbol{I}_u^s$ gearbeitet werden kann.

In einem zweiten Schritt wird $\Delta i_{uxx}$ in (40) gemäß seiner Definition in (27) ausgeschrieben

$$4\, u_{inj}\, \boldsymbol{y}_a^s \;=\; \begin{bmatrix} (\Delta i_{\alpha 0} - \Delta i_{m\alpha}) - (\Delta i_{\beta 1} - \Delta i_{m\beta}) - (\Delta i_{\alpha 2} - \Delta i_{m\alpha}) + (\Delta i_{\beta 3} - \Delta i_{m\beta}) \\ (\Delta i_{\beta 0} - \Delta i_{m\beta}) + (\Delta i_{\alpha 1} - \Delta i_{m\alpha}) - (\Delta i_{\beta 2} - \Delta i_{m\beta}) - (\Delta i_{\alpha 3} - \Delta i_{m\alpha}) \end{bmatrix} (41)$$

$$= \begin{bmatrix} \Delta i_{\alpha 0} - \Delta i_{\beta 1} - \Delta i_{\alpha 2} + \Delta i_{\beta 3} \\ \Delta i_{\beta 0} + \Delta i_{\alpha 1} - \Delta i_{\beta 2} - \Delta i_{\alpha 3} \end{bmatrix} - \begin{bmatrix} \Delta i_{m\alpha} - \Delta i_{m\beta} - \Delta i_{m\alpha} + \Delta i_{m\beta} \\ \Delta i_{m\beta} + \Delta i_{m\alpha} - \Delta i_{m\beta} - \Delta i_{m\alpha} \end{bmatrix} \qquad (42)$$

$$= \begin{bmatrix} \Delta i_{\alpha 0} - \Delta i_{\beta 1} - \Delta i_{\alpha 2} + \Delta i_{\beta 3} \\ \Delta i_{\beta 0} + \Delta i_{\alpha 1} - \Delta i_{\beta 2} - \Delta i_{\alpha 3} \end{bmatrix}. \qquad (43)$$

Es lässt sich also der zweidimensionale Anisotropie-Vektor $\boldsymbol{y}_a^s$ (skaliert mit $4\, u_{inj}$) unter Quadrat-Injektion durch die Subtraktions-Vorschrift (43) direkt aus der Strom Antwort (ohne EMF-Bereinigung und ohne Berechnung des isotropen Anteils) berechnen. Es ist erstmals nur eine Rechenstufe nötig, bestehend aus lediglich vier Subtraktionen und zwei Additionen. Damit erfordert die Identifikation der Einträge der Anisotropie der Induktivität nur einen Bruchteil des Rechen- und Implementationsaufwands der Verfahren gemäß Stand der Technik.

Die weitere Auswertung des nach obiger Vorschrift berechneten Anisotropievektors zur Berechnung des Rotorwinkels ist in einfachster Form (für ideal-sinusförmige Maschinen) durch folgende Gleichung möglich

$$\theta_r = \frac{1}{2} \operatorname{atan}\left(\frac{\Delta i_{\beta 0} + \Delta i_{\alpha 1} - \Delta i_{\beta 2} - \Delta i_{\alpha 3}}{\Delta i_{\alpha 0} - \Delta i_{\beta 1} - \Delta i_{\alpha 2} + \Delta i_{\beta 3}}\right) \tag{44}$$

EXPERIMENT:

Das vorstehend beschriebene Verfahren wurde an einem Prüfstand mit einem DSP-basierten Echtzeit-Rechensystem, einem 7,5 kW Umrichter und einer 1,6 kW Permanentmagnet-Synchronmaschine(PWSM) untersucht. Die Schaltfrequenz des Umrichters betrug 8kHz, wodurch Spannungsvorgaben und Strommessung mit 16kHz möglich sind. Bei einer Quadrat-Injektion beträgt die Injektions- und Stromregler-Frequenz folglich 4kHz (halbe PWM Frequenz).

Die Induktivität der Maschine betrug in der d-Achse $L_d$ = 8.3mH und in der q-Achse $L_q$ = 7.1mH. Das Anisotropie-Verhältnis beträgt somit lediglich $\frac{L_q - L_d}{L_q + L_d} \approx 8\%$, was einem relativ geringen Wert entspricht, der die Anwendung von Anisotropie-basierten Verfahren anspruchsvoll macht. Die Messergebnisse wurden mit einer Injektionsamplitude von 11V (bei 370V Maximalspannung) erzielt.

In Fig. 3 ist über der Zeit (in Sekunden) im oberen Graphen der Verlauf des gemessenen Rotorwinkels als Vergleichsgröße dargestellt. Darunter sind im mittleren Graphen die $\alpha$- und im unteren Graphen die $\beta$-Komponente des gefilterten Ergebnis-Differenzenvektors 4 $u_{inj} \boldsymbol{y}_a^s$ (jeweils in mA), der anschließend entweder per atan2() oder einem Entkopplungsverfahren ausgewertet werden kann. Aufgrund des Strom-Messrauschens benötigen alle Anisotropie-basierten Verfahren ein einfaches digitales Filter (z.B. PT1) zur Rauschunterdrückung, welches nicht vom Verfahren abhängt und damit im Rechenaufwand nicht einzubeziehen ist. Der Rechenaufwand beläuft sich im günstigsten Fall auf 2 Additionen und eine Bitshift-Operation.

Für die untersuchte relativ sinusförmige Maschine kann die einfache atan2()-Auswertung gewählt werden, deren Ergebnis in Fig. 4 über der Zeit (in Sekunden) aufgetragen ist. Der obere Graph zeigt erneut den gemessenen Rotorwinkel als Vergleichsgröße, worunter im mittleren Graphen der über atan2() berechnete Anisotropie-Winkel gegenübergestellt ist. Zusätzlich ist im unteren Graphen der Schätzfehler, d.h. die Abweichung zwischen geschätztem Anisotropie- und gemessenen Rotorwinkel (in elektrischen Grad) dargestellt. Der Fehler zeigt ein übliches Rauschband, das - falls erforderlich - über eine Steigerung der Injektionsamplitude verringert werden kann. Darüber hinaus zeigt sich im berechneten Rotorwinkel eine doppelt-periodische Schwankung, die durch eine statorfeste Anisotropie erklärt werden kann und bereits in Fig. 3 als Offset ersichtlich ist; und eine leichte sechsfach-periodische Schwankung, die in vielen Maschinen zu finden ist und geometrische Ursachen hat. Der Fehler zeigt damit eine für die Maschine übliche Charakteristik und verbleibt in einem relativ schmalen Band.

In Fig. 5 ist schematisch ein Schaltungsbild zur Regelung einer Drehfeldmaschine 1 dargestellt. Man erkennt den PWM-Pulswechselrichter 2, der die Drehfeldmaschine 1 über jeweils gestellte Klemmspannungen treibt. Aus den mittels eines geeigneten Sensors 3 gemessenen Phasenströmen wird ein Stromvektor abgeleitet, der vorliegend die Rückführgröße der Regelung darstellt. Abhängig von der Rückführgröße berechnet ein Micro-Controller 4 den jeweiligen Sollwert für die zu stellenden Spannungsvektoren. Nach entsprechender Transformation in das dreiphasige Klemmspannungssystem wird die Leistungselektronik 5 entsprechend angesteuert. Der Micro-Controller 4 ist zusätzlich durch Durchführung des vorstehend beschriebenen Verfahrens eingerichtet und ausgebildet.

Im nachfolgenden Beispiel wird Bezug auf die analoge Ermittlung der Einträge der magnetischen Anisotropie genommen:

Das vorstehend beschriebene Verfahren bietet die Möglichkeit einer besonders einfachen Ermittlung der Einträge der magnetischen Anisotropie. Insbesondere ist es erstmals möglich, die Ergebnisgleichung (43) zur Berechnung der Einträge der magnetischen Anisotropie in Analogtechnik auszuführen. Diese vorteilhafte Ausführungsvariante führt, wie anschließend erläutert wird, zu einer deutlich erhöhten Signalqualität und ermöglicht damit zudem, die mit Injektionsverfahren üblicherweise einhergehenden akustische Geräusche deutlich zu reduzieren.

Alle Verfahren zur Identifikation der Anisotropie unterliegen einem Zielkonflikt zwischen Signalqualität und akustischer Belastung, denn das Injektionssignal führt zu einer leichten, hochfrequenten Vibration der Drehfeldmaschine bzw. des Motors und damit zu einem unerwünschten akustischen Geräusch mit Injektionsfrequenz. Wird aber nicht ein bestimmtes Signal-zu-Rausch-Verhältnis (SRV) bei der Identifikation der Anisotropie erreicht, kann das Winkelsignal nicht zur Regelung verwendet werden. Dieser Zusammenhang bestimmt die minimal notwendige, einhergehende akustische Lautstärke.

Das Rauschen im Stromsignal entsteht hauptsächlich bei der Analog-Digital(A/D)-Wandlung. Ein eingesetzter Stromsensor erzeugt zunächst eine zum Strom proportionale Spannung, die dann zumeist am Eingang des Controllers (Bezugszeichen 4 in Fig. 5) mittels eines integrierten A/D-Wandlers in einen digitalen Zahlenwert gewandelt wird. Dieser Zahlenwert kann anschließend zur Stromregelung oder Berechnung der Anisotropie durch digitale Rechenoperationen innerhalb des Controllers verwendet werden.

Bedingt durch die Quantisierung und das einkoppelnde Rauschen während des Wandlungsprozesses haben A/D-Wandler ein bestimmtes, begrenztes SRV, was beispielsweise 11bit, d.h. 2048:1 sein kann. Dabei bezieht sich dieses Verhältnis auf den abbildbaren Messbereich im Vergleich zum Root-Mean-Square (RMS) des nach der A/D-Wandlung vorhandenen Rauschgehalts. Während dieses Verhältnis 2048:1 für eine Stromregelung (mehr als) ausreichend ist, stellt es aus folgendem Grund für die Identifikation der Anisotropie bereits eine Herausforderung dar: Während der Strommessbereich aus Gründen der Überlastfähigkeit beispielsweise auf das Vierfache des Nennstroms der Maschine ausgelegt ist, kann eine Amplitude der Injektionsantwort $\Delta \mathbf{I}_u^s$ (27) von mehr als 4% des Nennstroms bereits ein störendes Geräusch erzeugen. Aus diesem Verhältnis ergibt sich in der Injektionsantwort $\Delta \mathbf{I}_u^s$ (27) ein SRV

$$\frac{Y_\Delta}{Y_\Sigma} = 10\%,$$

von nur 25:1. Nun hat die Maschine beispielsweise ein übliches Anisotropieverhältnis von $\frac{Y_\Delta}{Y_\Sigma} = 10\%$, was bewirkt, dass nur 10% der obigen Injektionsantwort $\Delta \mathbf{I}_u^s$ (27) tatsächlich winkelabhängig sind. Damit ergibt sich schließlich für die anisotrope Stromantwort $\Delta \mathbf{I}_a^s$ (32) ein SRV von lediglich 2,5:1. Dieser SRV-Wert wäre für Regelungsanwendungen gehobenen Anspruchs bereits zu gering.

Das Rauschproblem lässt sich nun deutlich vereinfachen, wenn die A/D-Wandlung in der beschriebenen Signalkette an eine spätere Stelle verschoben wird. Weil die Gleichungen zur Bestimmung der magnetischen Anisotropie durch die vorgestellte Berechnungsvorschrift (37) nun erstmals so einfach sind, dass sie nur aus Additionen und Subtraktionen bestehen und keine Transformation oder Matrix-Inversion benötigen, ist es nun möglich, sie z.B. mittels Differenzverstärkern noch im analogen Signal umzusetzen.

Wie in Fig. 6 dargestellt, kommt in einer solchen Signalkette beispielsweise zuerst ein Sample & Hold-Glied 6 zum Einsatz, welches die als Stromantworten aus unterschiedlichen Zeitschritten (korrespondierend zu den Stell- oder Injektionsspannungen) gemessenen analogen Signalspannungen festhält. Die Ausgangswerte des Sample & Hold-Glieds 6 werden dann nach einer analogen Durchführung der Clarke-Transformation durch eine analoge Berechnungsschaltung 7, bestehend z.B. aus einer Anordnung von Differenzverstärkern, mittels der einfachen Rechenvorschrift (37) verarbeitet. Damit stehen als Ergebnis der Berechnungsschaltung 7 die gegebenenfalls skalierten Komponenten der magnetischen Anisotropie als Analogsignal zur Verfügung, die dann durch einen A/D-Wandler 8 in ein digitales Signal gewandelt werden. Wird an dieser Stelle nur ein sehr günstiger 8 Bit (256:1) A/D-Wandler eingesetzt, ist das resultierende SRV der identifizierten magnetischen Anisotropie in diesem Beispiel analoger Berechnung bereits um das 100-fache größer als im zuvor beschriebenen Beispiel einer digitalen Berechnung.

Zusammenfassend kann gesagt werden, dass die vorliegende Erfindung die Möglichkeit bietet, bei Ausführung der analogen Berechnung die Ursache des Rauschproblems erstmals zu überwinden. Im Wesentlichen unabhängig von der Injektionsamplitude steht bei entsprechender Einstellung der Verstärkungen der Differenzverstärker am Ende im Anisotropie-Signal immer das vollständige SRV des A/D-Wandlers zur Verfügung. Weil sich damit nur noch die übrigen, deutlich kleinen Fehlerquellen (wie z.B. Stromsensorfehler, Wirbelströme, Schalttotzeit, etc.) auf die Identifikation der Anisotropie auswirken, lässt sich bei einer Anisotropie-Berechnung nach Weiterbildungen des vorstehend beschriebenen Verfahrens durch Analogtechnik mit einer gegenüber bisherigen und digitalen Verfahren deutlich verringertem Injektionsamplitude und einem damit deutlich verringertem akustischen Geräusch die gleiche Anisotropie-Signalqualität erzielen. Eine solche analoge Verarbeitung wird durch die Einfachheit der Gleichungen zur Auswertung möglich, wenn die Spannungsvektoren wie vorstehend beschrieben gestellt werden, insbesondere als Quadrat gestellt werden, was auch als Quadrat-Injektion bezeichnet wird.

**Patentansprüche**

**1.** Verfahren zur Identifikation der magnetischen Anisotropie einer elektrischen Drehfeldmaschine (1), umfassend einen Rotor und einen Stator, wobei die Drehfeldmaschine (1) über getaktete Klemmspannungen nach dem Verfahren der Pulsweitenmodulation angesteuert wird,
**dadurch gekennzeichnet,**
**dass** während eines Injektionsintervalls vier Spannungsvektoren (U1, U2, U3, U4) gestellt werden, die in einer Raumzeigerdarstellung nach jeweiligem Abzug des gemeinsamen Mittelwerts (Ufoc) alle denselben Betrag aufweisen und jeweils paarweise zueinander orthogonal oder antiparallel stehen, dass als Antwort auf die vier Spannungsvektoren (U1, U2, U3, U4) jeweils eine korrespondierende Änderung des Stromvektors $\left(\Delta^2 i_s^u\right)$ ermittelt wird, und dass unter Berücksichtigung der Spannungsvektoren (U1, U2, U3, U4) aus den jeweiligen Änderungen der Stromvektoren $\left(\Delta^2 i_s^u\right)$ auf Komponenten der anisotropen Induktivität geschlossen wird.

2. Verfahren nach Anspruch 1,
**dadurch gekennzeichnet, dass** die vier Spannungsvektoren (U1, U2, U3, U4) jeweils einzeln durch eine Vektoraddition des gemeinsamen Mittelwerts (Ufoc) und einer von vier Injektionsspannungen gegeben sind, wobei die vier Injektionsspannungen jeweils paarweise zueinander orthogonal oder antiparallel stehen und den gleichen Betrag aufweisen.

3. Verfahren nach Anspruch 1 oder 2,
**dadurch gekennzeichnet, dass** die Drehfeldmaschine (1) unter Verwendung des Spannungsvektors der Klemmspannungen als Stellgröße geregelt und/oder gesteuert wird, wobei während des Injektionsintervalls ein konstanter Sollwert für den Spannungsvektor der Klemmspannungen vorgegeben wird, und wobei der gemeinsame Mittelwert (Ufoc) der vier
Spannungsvektoren (U1, U2, U3, U4) dem konstant vorgegebenen Sollwert entspricht.

4. Verfahren nach einem der vorhergehenden Ansprüche,
wobei in Raumzeigerdarstellung die vier Spannungsvektoren (U1, U2, U3, U4) nach Abzug ihres gemeinsamen Mittelwerts (Ufoc) jeweils parallel oder antiparallel zu den orthogonalen Achsen eines für die Raumzeigerdarstellung gewählten Koordinatensystems (Ualpha, Ubeta) stehen.

5. Verfahren nach einem der vorhergehenden Ansprüche,
**dadurch gekennzeichnet, dass** die zeitliche Dauer des Injektionsintervalls wenigstens zwei Perioden der Pulsweitenmodulation entspricht.

6. Verfahren nach einem der vorhergehenden Ansprüche,
**dadurch gekennzeichnet, dass** die zeitliche Dauer des Injektionsintervalls maximal dem Quotienten aus Phaseninduktivität und Phasenwiderstand der Drehfeldmaschine (1), insbesondere maximal 16 Perioden der Pulsweitenmodulation, entspricht.

7. Verfahren nach einem der Ansprüche 2 bis 6,
**dadurch gekennzeichnet, dass** die Drehfeldmaschine (1) mit einem Takt gesteuert und/oder geregelt wird, der wenigstens zwei Perioden der Pulsweitenmodulation umfasst und dessen zeitliche Dauer maximal dem Quotienten aus Phaseninduktivität und Phasenwiderstand der Drehfeldmaschine (1) entspricht, insbesondere maximal 16 PWM-Perioden beträgt.

8. Verfahren nach einem der vorhergehenden Ansprüche,
**dadurch gekennzeichnet, dass** die vier Spannungsvektoren (U1, U2, U3, U4,) in unmittelbar aufeinanderfolgenden PWM-Takten gestellt werden.

9. Verfahren nach einem der vorhergehenden Ansprüche,
**dadurch gekennzeichnet, dass** die Spannungsvektoren (U1, U2, U3, U4) mit einem Betrag nach Abzug des gemeinsamen Mittelwerts (Ufoc) von wenigstens 1 % des Betrags einer maximalen Stellspannung, insbesondere zwischen 5V und 100V, gewählt werden.

10. Verfahren nach einem der vorhergehenden Ansprüche,

**dadurch gekennzeichnet, dass** die korrespondierenden Änderungen des Stromvektors $\left(\Delta^2 i_s^u\right)$ jeweils als Differenzvektoren in Raumzeigerdarstellung ermittelt werden.

11. Verfahren nach Anspruch 10,

    **dadurch gekennzeichnet, dass** aus den Differenzvektoren in Raumzeigerdarstellung $(\Delta^2 i_s^u)$ die anisotrope Stromantwort in Raumzeigerdarstellung ermittelt wird, und dass aus der ermittelten anisotropen Stromantwort in Raumzeigerdarstellung auf die Komponenten der magnetischen Anisotropie geschlossen wird.

12. Verfahren nach Anspruch 10,

    wobei aus den Einträgen der Differenzvektoren in Raumzeigerdarstellung $(\Delta^2 i_s^u)$ ausschließlich durch Additionen und Subtraktionen gegebenenfalls bis auf einen Skalierungsfaktor auf die Komponenten der magnetischen Anisotropie geschlossen wird.

13. Verfahren nach Anspruch 11 oder 12,
    **dadurch gekennzeichnet, dass** aus den Komponenten der magnetischen Anisotropie auf den Rotorwinkel geschlossen wird.

14. Verfahren nach einem der vorhergehenden Ansprüche,
    **dadurch gekennzeichnet, dass** für die Raumzeigerdarstellung ein statorfestes orthogonales Koordinatensystem gewählt wird.

15. Verfahren nach einem der vorhergehenden Ansprüche,
    **dadurch gekennzeichnet, dass** die Komponenten der magnetischen Anisotropie analog ermittelt werden.

16. Verfahren nach Anspruch 15,
    **dadurch gekennzeichnet, dass** die Komponenten der magnetischen Anisotropie analog ermittelt werden, wobei die Spannungsvektoren (U1, U2, U3, U4) mit einem Betrag nach Abzug des gemeinsamen Mittelwerts (Ufoc) von wenigstens 0,1% des Betrags einer maximalen Stellspannung, insbesondere zwischen 0,5V und 10V, gewählt werden.

17. Vorrichtung zur Steuerung und/oder Regelung einer Drehfeldmaschine (1), umfassend einen Stator und einen Rotor, mit einem steuerbaren PWM-Umrichter (5) zur Ausgabe von getakteten Klemmspannungen, mit einer Einrichtung zur Erfassung einer Anzahl von Phasenströmen und mit einem Controller (4) zur Ansteuerung des PWM-Umrichters (5), der zur Durchführung des Verfahrens nach einem der vorhergehenden Ansprüche eingerichtet und ausgebildet ist.

18. Drehfeldmaschine (1), umfassend einen Stator und einen Rotor, mit einer Vorrichtung zur Steuerung und/oder Regelung nach Anspruch 17.

**Claims**

1. Method for identifying the magnetic anisotropy of an electrical three-phase machine (1), comprising a rotor and a stator, wherein the three-phase machine (1) is actuated by means of clocked terminal voltages in accordance with the method of pulse width modulation, **characterized**
   **in that** four voltage vectors (U1, U2, U3, U4) are set during one injection interval, which voltage vectors all have the same magnitude in a space vector representation after respective subtraction of the common mean value (Ufoc) and are respectively orthogonal or antiparallel to one another in pairs, in that a corresponding change in the current

   vector $(\Delta^2 i_s^u)$ is ascertained in each case in response to the four voltage vectors (U1, U2, U3, U4), and in that components of the anisotropic inductance are inferred from the respective changes in the current vectors $(\Delta^2 i_s^u)$ taking into consideration the voltage vectors (U1, U2, U3, U4).

2. Method according to Claim 1,
   **characterized in that** the four voltage vectors (U1, U2, U3, U4) are each provided individually by vector addition of the common mean value (Ufoc) and one of four injection voltages, wherein the four injection voltages are respectively orthogonal or antiparallel to one another in pairs and have the same magnitude.

3. Method according to Claim 1 or 2,
**characterized in that** the three-phase machine (1) is regulated and/or controlled using the voltage vector of the terminal voltages as an actuating variable, wherein a constant setpoint value for the voltage vector is prespecified to the terminal voltages during the injection interval, and wherein the common mean value (Ufoc) of the four voltage vectors (U1, U2, U3, U4) corresponds to the constantly prespecified setpoint value.

4. Method according to one of the preceding claims, wherein, in the space vector representation, the four voltage vectors (U1, U2, U3, U4) are respectively parallel or antiparallel to the orthogonal axes of a coordinate system (Ualpha, Ubeta), which is selected for the space vector representation, after subtraction of their common mean value (Ufoc).

5. Method according to one of the preceding claims, **characterized in that** the duration of the injection interval corresponds to at least two periods of the pulse width modulation.

6. Method according to one of the preceding claims, **characterized in that** the duration of the injection interval corresponds at most to the quotient of phase inductance and phase resistance of the three-phase machine (1), in particular to at most 16 periods of the pulse width modulation.

7. Method according to one of Claims 2 to 6, **characterized in that** the three-phase machine (1) is controlled and/or regulated with a clock which comprises at least two periods of the pulse width modulation and the duration of which corresponds at most to the quotient of phase inductance and phase resistance of the three-phase machine (1), in particular to at most 16 PWM periods.

8. Method according to one of the preceding claims, **characterized in that** the four voltage vectors (U1, U2, U3, U4) are set in immediately successive PWM clock cycles.

9. Method according to one of the preceding claims, **characterized in that** the voltage vectors (U1, U2, U3, U4) are selected with a magnitude after subtraction of the common mean value (Ufoc) of at least 1% of the magnitude of a maximum setting voltage, in particular between 5 V and 100 V.

10. Method according to one of the preceding claims, **characterized in that** the corresponding changes in the current vector $\left(\Delta^2 i_s^u\right)$ are each ascertained as difference vectors in the space vector representation.

11. Method according to Claim 10,
**characterized in that** the anisotropic current response in the space vector representation is ascertained from the difference vectors $\left(\Delta^2 i_s^u\right)$ in the space vector representation, and **in that** the components of the magnetic anisotropy are inferred from the ascertained anisotropic current response in the space vector representation.

12. Method according to Claim 10,
wherein the components of the magnetic anisotropy are inferred from the entries of the difference vectors $\left(\Delta^2 i_s^u\right)$ in the space vector representation exclusively by addition and subtraction possibly apart from a scaling factor.

13. Method according to Claim 11 or 12,
**characterized in that** the rotor angle is inferred from the components of the magnetic anisotropy.

14. Method according to one of the preceding claims, **characterized in that** a stator-fixed orthogonal coordinate system is selected for the space vector representation.

15. Method according to one of the preceding claims, **characterized in that** the components of the magnetic anisotropy are ascertained in an analogue manner.

**16.** Method according to Claim 15,
**characterized in that** the components of the magnetic anisotropy are ascertained in an analogue manner, wherein the voltage vectors (U1, U2, U3, U4) are selected with a magnitude after subtraction of the common mean value (Ufoc) of at least 0.1% of the magnitude of a maximum setting voltage, in particular between 0.5 V and 10 V.

**17.** Apparatus for controlling and/or regulating a three-phase machine (1), comprising a stator and a rotor, having a controllable PWM converter (5) for outputting clocked terminal voltages, having a device for detecting a number of phase currents and having a controller (4) for actuating the PWM converter (5) which is designed and configured for carrying out the method according to one of the preceding claims.

**18.** Three-phase machine (1), comprising a stator and a rotor, having a control and/or regulation apparatus according to Claim 17.

**Revendications**

**1.** Procédé d'identification de l'anisotropie magnétique d'une machine à champ rotatif (1) électrique, comprenant un rotor et un stator, dans lequel la machine à champ rotatif (1) est pilotée par l'intermédiaire de tensions de serrage cadencées selon le procédé de la modulation de largeur d'impulsion,
**caractérisé en ce**
**que** pendant un intervalle d'injection, quatre vecteurs de tension (U1, U2, U3, U4) sont réglés, qui présentent tous sur une représentation de Fresnel après déduction respective de la valeur moyenne commune (Ufoc) la même valeur et sont orthogonaux ou antiparallèles les uns par rapport aux autres respectivement par paire, que respectivement une modification correspondante du vecteur de courant $(\Delta^2 i_s^u)$ est déterminée en tant que réponse aux quatre vecteurs de tension (U1, U2, U3, U4), et que sont déduits en tenant compte des vecteurs de tension (U1, U2, U3, U4) à partir des modifications respectives des vecteurs de courant $(\Delta^2 i_s^u)$ des composants de l'inductance anisotrope.

**2.** Procédé selon la revendication 1,
**caractérisé en ce que** les quatre vecteurs de tension (U1, U2, U3, U4) sont obtenus respectivement individuellement par une addition vectorielle de la valeur moyenne commune (Ufoc) et d'une de quatre tensions d'injection, dans lequel les quatre tensions d'injection sont orthogonales ou antiparallèles respectivement par paire les unes par rapport aux autres et présentent la même valeur.

**3.** Procédé selon la revendication 1 ou 2,
**caractérisé en ce que** la machine à champ rotatif (1) est régulée et/ou commandée en tant que grandeur de réglage en utilisant le vecteur de tension des tensions de serrage, dans lequel pendant l'intervalle d'injection, une valeur théorique constante est spécifiée pour le vecteur de tension des tensions de serrage, et dans lequel la valeur moyenne commune (Ufoc) des quatre vecteurs de tension (U1, U2, U3, U4) correspond à la valeur théorique spécifiée de manière constante.

**4.** Procédé selon l'une quelconque des revendications précédentes,
dans lequel les quatre vecteurs de tension (U1, U2, U3, U4) après déduction de leur valeur moyenne commune (Ufoc) sont respectivement parallèles ou antiparallèles par rapport aux axes orthogonaux d'un système de coordonnées (Ualpha, Ubeta) choisi pour la représentation de Fresnel sur la représentation de Fresnel.

**5.** Procédé selon l'une quelconque des revendications précédentes,
**caractérisé en ce que** la durée temporelle de l'intervalle d'injection correspond au moins à deux périodes de la modulation de largeur d'impulsion.

**6.** Procédé selon l'une quelconque des revendications précédentes,
**caractérisé en ce que** la durée temporelle de l'intervalle d'injection correspond au maximum au quotient de l'inductance de phase et de la résistance de phase de la machine à champ rotatif (1), en particulier au maximum à 16 périodes de la modulation de largeur d'impulsion.

**7.** Procédé selon l'une quelconque des revendications 2 à 6,
**caractérisé en ce que** la machine à champ rotatif (1) est commandée et/ou régulée à une cadence, qui comprend au moins deux périodes de la modulation de largeur d'impulsion et dont la durée temporelle correspond au maximum au quotient de l'inductance de phase et de la résistance de phase de la machine à champ rotatif (1), en particulier au maximum à 16 périodes de PWM.

**8.** Procédé selon l'une quelconque des revendications précédentes,
**caractérisé en ce que** les quatre vecteurs de tension (U1, U2, U3, U4) sont réglés dans des cadences de PWM se suivant les unes les autres directement.

**9.** Procédé selon l'une quelconque des revendications précédentes,
**caractérisé en ce que** les vecteurs de tension (U1, U2, U3, U4) sont choisis avec une valeur après déduction de la valeur moyenne commune (Ufoc) d'au moins 1 % de la valeur d'une tension de réglage maximale, en particulier entre 5 V et 100 V.

**10.** Procédé selon l'une quelconque des revendications précédentes,

**caractérisé en ce que** les modifications correspondantes du vecteur de courant $(\Delta^2 i_s^u)$ sont déterminées respectivement en tant que vecteurs de différence sur la représentation de Fresnel.

**11.** Procédé selon la revendication 10,
**caractérisé en ce que** la réponse de courant anisotrope sur la représentation de Fresnel est déterminée à partir des vecteurs de différence sur la représentation de Fresnel $(\Delta^2 i_s^u)$, et que les composants de l'anisotropie magnétique sont déduits à partir de la réponse de courant anisotrope déterminée sur la représentation de Fresnel.

**12.** Procédé selon la revendication 10,
dans lequel les composants de l'anisotropie magnétique sont déduits exclusivement par additions et soustractions éventuellement à l'exception d'un facteur d'échelle à partir des entrées des vecteurs de différence sur la représentation de Fresnel $(\Delta^2 i_s^u)$.

**13.** Procédé selon la revendication 11 ou 12, **caractérisé en ce que** les angles de rotor sont déduits à partir des composants de l'anisotropie magnétique.

**14.** Procédé selon l'une quelconque des revendications précédentes,
**caractérisé en ce qu'**un système de coordonnées orthogonal solidaire du stator est choisi pour la représentation de Fresnel.

**15.** Procédé selon l'une quelconque des revendications précédentes,
**caractérisé en ce que** les composants de l'anisotropie magnétique sont déterminés de manière analogique.

**16.** Procédé selon la revendication 15,
**caractérisé en ce que** les composants de l'anisotropie magnétique sont déterminés de manière analogique, dans lequel les vecteurs de tension (U1, U2, U3, U4) sont choisis avec une valeur après déduction de la valeur moyenne commune (Ufoc) d'au moins 0,1 % de la valeur d'une tension de réglage maximale, en particulier entre 0,5 V et 10 V.

**17.** Dispositif de commande et/ou de régulation d'une machine à champ rotatif (1), comprenant un stator et un rotor, avec un convertisseur de PWM (5) pouvant être commandé servant à envoyer des tensions de serrage cadencées, avec un système de détection d'un nombre de courants de phase et avec un contrôleur (4) servant à piloter le convertisseur de PWM (5), qui est mis au point et réalisé pour mettre en œuvre le procédé selon l'une quelconque des revendications précédentes.

**18.** Machine à champ rotatif (1) comprenant un stator et un rotor, avec un dispositif de commande et/ou de régulation selon la revendication 17.

Fig. 1

Fig. 2

Fig. 3

Fig. 4

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP O579694 A1
- EP 2023479 A1
- EP 0579694 A1
- US 20100327789 A1


**In der Beschreibung aufgeführte Nicht-Patentliteratur**

- **P. L. JANSEN ; R. D. LORENZ.** Transducerless Position and Velocity Estimation in Induction and Salient AC Machines. *IEEE Trans. on Industrial Applications,* 1995, vol. 31, 240-247
- **M. J. CORLEY ; R. D. LORENZ.** Rotor Position and Velocity Estimation for a Salient-Pole Permanent Magnet Synchronous Machine at Standstill and High Speeds. *IEEE Trans. on Industrial Applica- tions,* 1998, vol. 34, 784-789
- **D. PAULUS ; P. LANDSMANN ; R. KENNEL.** Sensorless Field- oriented Control for Permanent Magnet Synchronous Machines with an Arbitrary Injection Scheme and Direct Angle Calculation. *IEEE Conf. SLED,* 2011, 41-46
- **M. SCHROEDL.** Operation of the permanent magnet synchronous machine without a mechanical sensor. *Conf. Power Electronics and Variable-Speed Drives,* 1990, 51-56
- **F. DE BELIE ; T. VYNCKE ; J. MELKEBEEK.** Parameterless Rotor Position Estimation in a Direct-Torque Controlled Salient-Pole PMSM without Using Additional Test Signal. *IEEE Conf. ICEM,* 2010, 1-6
- **S. KIM ; Y.-C. KWON ; S.-K. SUL ; J. PARK ; S.-M. KIM.** Position Sensorless Operation of IPMSM with Near PWM Switching Frequency Signal Injection. *IEEE Conf. ICPE - ECCE Asia,* 2011, 1660-1665
- **P. LANDSMANN ; D. PAULUS ; P. STOLZE ; R. KENNEL.** Saliency based encoderless predictive torque control without signal injection. *IEEE Conf. IPEC,* 2010, 3029-3034